(19) Europäisches Patentamt
European Patent Office
Office européen des brevets

(11) EP 2 194 405 B1

(12) EUROPEAN PATENT SPECIFICATION

(45) Date of publication and mention of the grant of the patent:
**17.02.2016 Bulletin 2016/07**

(21) Application number: **08834556.6**

(22) Date of filing: **25.09.2008**

(51) Int Cl.:
***G02B 5/08*** (2006.01) ***C08J 5/18*** (2006.01)
***C08J 9/00*** (2006.01) ***F21V 7/00*** (2006.01)
***F21V 7/22*** (2006.01) ***G02B 5/02*** (2006.01)
***G02F 1/13357*** (2006.01) ***G02F 1/1335*** (2006.01)

(86) International application number:
**PCT/JP2008/067217**

(87) International publication number:
**WO 2009/041448 (02.04.2009 Gazette 2009/14)**

# (54) WHITE FILM AND SURFACE LIGHT SOURCES WITH THE SAME

WEISSE FOLIE UND OBERFLÄCHENLICHTQUELLEN DAMIT

FILM BLANC ET SOURCES DE LUMIÈRE DE SURFACE LE COMPRENANT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.09.2007 JP 2007253720**
**28.09.2007 JP 2007253721**

(43) Date of publication of application:
**09.06.2010 Bulletin 2010/23**

(73) Proprietor: **Toray Industries, Inc.**
**Tokyo, 103-8666 (JP)**

(72) Inventors:
- **AOYAMA, Shigeru**
  **Otsu-shi**
  **Shiga 520-8558 (JP)**
- **KIKUCHI, Akikazu**
  **Otsu-shi**
  **Shiga 520-8558 (JP)**
- **TAKAHASHI, Kozo**
  **Otsu-shi**
  **Shiga 520-8558 (JP)**

(74) Representative: **Pillep, Bernhard**
**Kador & Partner**
**Corneliusstrasse 15**
**80469 München (DE)**

(56) References cited:
**EP-A1- 1 702 761**
**JP-A- 2002 098 811**
**JP-A- 2004 101 600**
**JP-A- 2006 142 817**
**JP-A- 2007 112 121**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 194 405 B1

**Description**

TECHNICAL FIELD

The present invention relates to an improvement in a white film. More specifically, the invention relates to a white film which is suitable as reflection members (a reflection plate and a reflector) for surface light sources and can give a surface light source that is brighter and excellent in lighting efficiency.

BACKGROUND ART

In recent years, a large number of displays using liquid crystal have been used as a display device for a personal computer, a television, a portable telephone or the like. These liquid crystal displays themselves are each not any photogen; thus, by setting a surface light source called a backlight to the display from the backside thereof, and irradiating the display with light, the display makes it possible to attain displaying. The backlight has a surface light source structure of a type called a side light type or a direct light type in order to meet not only a requirement that light should be emitted but also a requirement that the whole of the screen should be evenly irradiated therewith. A sidelight type backlight, that is, a backlight of a type of emitting light onto a screen from a side thereof is applied, in particular, to a thin liquid crystal display used in a notebook-size personal computer or the like, which has been desired to be made thin and small in size.

In general, in a side light type backlight, a light guide plate manner is adopted, which is a manner of irradiating the whole of a liquid crystal display evenly, using a light guide plate wherein a cold cathode fluorescent lamp is used as an illumination light source to conduct and diffuse light evenly from a light guide plate edge. In order to make use of light more efficiently in this illumination manner, a reflector is arranged around the cold cathode fluorescent lamp, and further a reflection plate is set under the light guide plate to cause light diffused from the light guide plate to the backside to be reflected toward the liquid crystal screen side. In this way, a loss of light from the cold cathode fluorescent lamp is made small, so that a function of making the liquid crystal screen bright is given thereto.

In the meantime, for large screens as in liquid crystal televisions, a direct light type light manner has been adopted since it cannot be expected to make the brightness of any large-area screen high according to the edge light manner. This manner is a manner of arranging cold cathode fluorescent lamps in parallel under a liquid crystal screen. The cold fluorescent lamps are arranged in parallel on a reflection plate. The reflection plate is a flat plate, a plate wherein a region for the cold cathode fluorescent lamps is molded into a semicircular concave form, or some other plate.

A reflector or reflection plate used in such a source light source for a liquid crystal screen (generically named a surface light source reflection member) is required to be a thin film and further have a high reflective function. Hitherto, a film to which a white pigment is added, or a film into which fine voids are incorporated has been used alone, or a product wherein such a film is caused to adhere onto a metallic plate, a plastic plate or the like has been used. In the case of using a film into which fine voids are incorporated, the effect of improving the brightness and the evenness thereof are particularly good; thus, the film has been widely used (Patent Document 1 and 2).

Incidentally, in connection with the usage of liquid crystal screens, in recent years, the adoption of the screens has been spreading in various instruments, such as desktop personal computers, televisions and displays of portable telephones, besides conventional notebook-size personal computers. As images on liquid crystal screens are required to be minuter, improvements are being made for making the brightness of the liquid crystal screens higher, and making images thereon more vivid and easier to watch. Their illumination light sources (for example, their cold cathode fluorescent lamps) have also been turned to light sources giving a higher brightness and a higher output.

Patent Document 1 JP-A-6-322153
Patent Document 2 JP-A-7-118433

Document EP 1 702 761 A1 discloses an optical film according to the preamble of appended claim 1.

DISCLOSURE OF THE INVENTION

Problems to be solved by the Invention

However, in the case of the above-mentioned films in the prior art, the light reflectivity is insufficient; thus, there remain problems that when a reflection plate or reflector, which is a surface light source reflection member, is used, light from an illumination light source is partially transmitted to the opposite surface so that the brightness of the liquid crystal screen becomes insufficient, and further a transmission loss of the light from the illumination light source causes a fall in the efficiency of the illumination, and other problems. For this reason, the films have been required, as white films, to be further improved in reflectivity and concealing property.

Means for solving the Problems

The invention is defined by the appended claims.

Thus, the while film of the invention is a white film including therein resin particles and voids formed around the resin particles, the film having a layer, wherein the number-average particle size Dn of the resin particles is 1.5 μm or less, the resin particles are contained in a number of 0.05 or more particles/$\mu m^2$, and the proportion of the number of resin particles having a particle diameter of 2 μm or more is 15% or less.

Effects of the Iinvention

The white film of the invention is excellent in reflection property, lightweightness, and others. When the film is used, in particular, as a reflection plate or reflector in a surface light source, the film makes it possible to lighten a liquid crystal screen brightly and make liquid crystal images thereon more vivid and easier to watch. Thus, the white film is useful.

BEST MODE FOR CARRYING OUT THE INVENTION

The white film of the invention needs to have therein resin particles, and have a layer wherein voids are formed around the resin particles as a nucleus material (S layer). By incorporating the voids around the resin particles, a white film having a high reflection property can easily be produced as will be described later. When inorganic particles are used as the nucleus material, many voids can be formed around the nucleus material in the same manner. However, inorganic particles contain impurities more easily than resin. The impurity-containing inorganic particles have light absorptivity although the absorptivity is slight. Therefore, when the inorganic particles are incorporated into the whole of a film or a main layer thereof in a large amount, it is difficult to heighten properties of the formed white film sufficiently. In many cases, about inorganic particles, the particulate shape thereof does not become spherical easily; therefore, uniform voids are not easily formed. When the resin particles are used as the nucleus material, the light absorptivity can be further restrained and the reflection efficiency of the formed white film can be made higher than when inorganic particles are used as the nucleus material. Furthermore, the white film can be made lighter.

In the white film of the invention, the voids may be independent voids, or may be plural voids continuous to each other. The shape of the voids is not particularly limited. The whiteness and the light reflectivity of the film are expressed by a matter that light rays emitted into the film are reflected on gas-solid interfaces (gas-solid interfaces made of the voids and a matrix resin or the resin particles) in the film; thus, it is preferred that the gas-solid interfaces are formed in large numbers in the thickness direction of the film. In order to form the gas-solid interfaces in large numbers in the thickness direction of the film, it is preferred that the section of the voids is in a circular form or in the form of an ellipse extended to the plane direction of the film. In the invention, the matrix resin, which may be abbreviated to the "matrix", denotes all of one or more resins that are contained in the S layer and are different from the resin particles.

In the white film of the invention, the number-average particle size Dn of the resin particles contained in the S layer needs to be 1.5 μm or less. The number-average particle size Dn of the resin particles referred to herein is the diameter of the resin particles observed in a cross section of the S layer of the white film. In a case where the shape thereof is not a complete round, the number-average particle size Dn is a value when the shape is converted into a complete round having the same area. The number-average particle size Dn may be obtained by a method that will be described later.

The number-average particle size Dn is more preferably 1.2 μm or less, even more preferably 1.0 μm or less. If the number-average particle size Dn of the resin particles is more than 1.5 μm in the invention, a large number of voids wherein the resin particles are used as nuclei are not easily incorporated into the white film, or coarse voids are formed. As a result, a large number of gas-solid interfaces are not easily formed in the thickness direction of the film. For this reason, the whiteness, the light refection property and the lightweightness are poor as properties for the white film. Moreover, even if the white film is integrated into a liquid crystal display device, the brightness property thereof may be unfavorably poor. By setting the number-average particle size Dn of the resin particles contained in the S layer to 1.5 μm or less in the invention, a high reflection property can be obtained as a property for the white film.

For setting the number-average particle size Dn to 1.5 μm or less in the white film of the invention, the following methods and others are given as will be described later: 1) resin particles the particle diameter of which is beforehand controlled are used, 2) when a thermoplastic resin is used for the resin particles, the apparent melt viscosity of the resin particles incorporated inside and the apparent melt viscosity of the matrix are controlled into predetermined ranges, 3) a combination of a predetermined matrix with predetermined resin particles is used, and 4) a dispersing agent is incorporated into the matrix.

In the white film of the invention, the resin particles need to be incorporated into the S layer in a number of 0.05 or more particles/$\mu m^2$. The number of the resin particles in the invention is a number obtained by a measuring method that will be described later. The number is more preferably 0.08 or more particles/$\mu m^2$, even more preferably 0.10 or

more particles/$\mu m^2$, in particular preferably 0.11 or more particles/$\mu m^2$, and most preferably 0.12 or more particles/$\mu m^2$. If the resin particles are in a number of less than 0.1 particles/$\mu m^2$ in the invention, a large number of voids wherein the resin particles are used as nuclei are not easily incorporated into the white film, or coarse voids are formed. As a result, a large number of gas-solid interfaces are not easily formed in the thickness direction of the film. For this reason, the whiteness, the light refection property and the lightweightness are poor as properties for the white film. Moreover, even if the white film is integrated into a liquid crystal display device, the brightness property thereof may be unfavorably poor. By incorporating the resin particles into the S layer in a number of 0.05 or more particles/$\mu m^2$ in the invention, a high reflection property can be obtained as a property for the white film.

For incorporating the resin particles into the S layer in a number of 0.05 or more particles/$\mu m^2$ in the white film of the invention, the following methods and others are given as will be described later: 1) resin particles the particle diameter of which is beforehand controlled are used, and then a predetermined amount thereof is added thereto, 2) when a matrix and an incompatible thermoplastic resin are used for the resin particles, the apparent melt viscosity of the raw material of the resin particles incorporated inside and the apparent melt viscosity of the matrix are controlled into predetermined ranges to disperse the resin particles into a fine form, 3) a combination of a predetermined matrix with predetermined resin particles is used to disperse the resin particles into a fine form, 4) a dispersing agent is incorporated into the matrix to disperse the resin particles into a fine form, and 5) dispersing into a fine form is attained by any one of the methods 2) to 4), and then an incompatible thermoplastic resin which is to be the resin particles is added to the matrix in a predetermined amount or more.

Moreover, in the white film of the invention, the proportion of the number of resin particles having a particle diameter of 2 $\mu m$ or more out of the resin particles contained in the S layer needs to be 15% or less of the number of all the resin particles in the S layer. The proportion is more preferably 12% or less, more preferably 10% or less, and in particular preferably 8% or less. If the proportion of the resin particles having a particle diameter of 2 $\mu m$ or more is more than 15% in the invention, a large number of voids wherein the resin particles are used as nuclei are not easily incorporated into the white film, or coarse voids are formed. As a result, a large number of gas-solid interfaces are not easily formed in the thickness direction of the film. For this reason, the whiteness, the light refection property and the lightweightness are poor as properties for the white film. Moreover, even if the white film is integrated into a liquid crystal display device, the brightness property thereof may be unfavorably poor. By controlling the proportion of the number of resin particles having a particle diameter of 2 $\mu m$ or more out of the resin particles contained in the S layer into 15% or less in the white film of the invention, a high reflection property as a property for the white film can be obtained.

For setting the proportion of the number of resin particles having a particle diameter of 2 $\mu m$ or more out of the resin particles contained in the S layer to 15% or less in the white film of the invention, the following methods and others are given as will be described later: 1) resin particles the particle diameter of which is beforehand controlled are used, 2) when the resin particles are a matrix and an incompatible thermoplastic resin, the apparent melt viscosity of the resin particles in the S layer and the apparent melt viscosity of the matrix in the S layer are controlled into predetermined ranges, 3) a combination of a predetermined matrix with predetermined resin particles is used, 4) a dispersing agent is incorporated into the matrix.

As described above, the white film of the invention makes it possible to form a large number of gas-solid interfaces in the thickness direction of the film to give a high reflection property which conventional white films cannot reach. In the case of using the film, in particular, as a reflection film for liquid crystal display, the utilization efficiency of light can be made high. As a result, a high brightness enhanced effect which cannot be obtained by conventional white films can be obtained.

In the white film of the invention, it is preferred that the ratio of the volume-average particle size Dv of the resin particles contained in the S layer to the number-average particle size Dn thereof, Dv/Dn, is 1. 7 or less. The ratio Dv/Dn of the volume-average particle size Dv of the resin particles to the number-average particle size Dn thereof, referred to herein, is a value obtained by a method that will be described below. The volume-average particle size Dv is obtained, and then the ratio thereof to the number-average particle size Dn, Dv/Dn, is obtained, whereby the ratio Dv/Dn can be obtained. The resultant Dv/Dn is a value representing the spread of the particle diameters of the resin particles. As this value is larger, the spread of the distribution of the particle diameters of the resin particles is larger. The lower limit thereof is theoretically 1.0. This case means a complete mono-dispersion. The ratio Dv/Dn is more preferably 1.6 or less, even more preferably 1. 5 or less, and in particular preferably 1.4 or less. If the ratio Dv/Dn is more than 1.7 in the white film of the invention, coarse voids are formed in the white film so that voids wherein the resin particles are used as nuclei are not easily formed into an even form. Thus, a large number of gas-solid interfaces are not easily formed in the thickness direction of the film. By setting the ratio of the volume-average particle size Dv of the resin particles contained in the S layer to the number-average particle size Dn thereof, Dv/Dn, to 1.7 or less in the white film of the invention, uniform voids can be formed in the film. As a result, a high reflection property can be obtained as a property for the white film.

The white film of the invention may be yielded by dispersing an incompatible resin which is to be the resin particles into one or more resins which are to be the matrix, working this into a sheet form, and then stretching (drawing)

this sheet monoaxially or biaxially.

In the white film of the invention, about the incompatible resin, which are used as the resin particles, the material thereof may be thermoplastic resin or crosslinkable resin particles. When a thermoplastic resin is used for the resin particles, the film can be produced through a simple step. Thus, an advantage is produced from the viewpoint of costs. On the other hand, when crosslinkable resin particles are used, the number of steps may be made larger than when the thermoplastic resin is used. However, by use of resin particles the shape of which is beforehand controlled to give the above-mentioned range, a white film having the above-mentioned requirements can easily be obtained.

In the white film of the invention, the S layer preferably contains therein a crystalline resin (A) besides the resin particles. When the layer contains at least the crystalline resin (A) as its matrix, the S layer can be orientation-crystallized by subjecting the layer to stretching and thermal treatment. Thus, a white film excellent in tensile strength and thermostability can be produced. The crystalline resin is a resin, of which an exothermic peak resulting from the crystallization thereof is observed in a differential scanning calorimetric chart which is obtained from a 2$^{nd}$ run by a method that will be described later in accordance with JIS K7122(1999). More specifically, a resin, of which the crystallization enthalpy $\Delta$Hcc obtained from the area of the exothermic peak is 1 J/g or more is defined as a crystalline resin. When one species of crystalline resin is present in the resin(s) constituting the matrix in the white film of the invention, the resin is defined as the crystalline resin (A). When plural crystalline resins constituting the matrix are contained, the main crystalline resin out of the crystalline resins is defined as the crystalline resin (A). In the white film of the invention, about a resin used as the crystalline resin (A), the crystallization enthalpy $\Delta$Hcc is preferably 5 J/g or more, more preferably 10 J/g or more, even more preferably 15 J/g or more. When the crystallization enthalpy of the crystalline resin (A) is set into the range in the white film of the invention, the orientation-crystallization based on the stretching and thermal treatment can be made higher, so that a white film better in tensile strength and thermostability can be obtained.

The crystalline resin (A) used in the white film of the invention is preferably a resin satisfying the above-mentioned requirement. Specific examples thereof include polyester resins such as polyethylene terephthalate, polyethylene-2,6-naphthalate, polypropylene terephthalate, polybutylene terephthalate and polylactic acid, polyolefin resins such as polyethylene, polystyrene and polypropylene, polyamide resins, polyimide resins, polyether resins, polyester amide resins, polyether ester resins, acrylic resins, polyurethane resins, polycarbonate resins, and polyvinyl chloride resins. The crystalline resin (A) is in particular preferably made mainly of a thermoplastic resin selected from polyester resins, polyolefin resins, polyamide resins or acrylic resins, or mixtures thereof, out of the above-mentioned resins, since monomer species copolymerizable therewith are diverse and the adjustment of physical properties of the materials is made easy by the diversity. From the viewpoint of, in particular, tensile strength, thermostability and others, more preferred is a polyester resin such as polyethylene terephthalate, polyethylene-2,6-naphthalate, polypropylene terephthalate, or polybutylene terephthalate. By use of the polyester resin as the matrix resin, the resin can give a high tensile strength to a film when the film is made therefrom while a high non-colorability is maintained. The polyester resin is also inexpensive.

The crystallization enthalpy can be adjusted by copolymerizing a monomer species of a resin constituting the crystalline resin (A) appropriately. The crystallization enthalpy can be made high, for example, by introducing an aromatic skeleton, such as a benzene ring, a naphthalene ring, an anthrecene ring or a pyrene ring, into the main skeleton, or adding a crystallization promoter or the like into the resin. The crystallization enthalpy can be made low, for example, by introducing, into the main skeleton, an alicyclic skeleton such as a cyclohexane skeleton or a norbornene skeleton, or a bulky skeleton such as a bisphenol A skeleton, a spiroglycol skeleton or bisphenoxyethanol fluorene.

By introducing a plasticizer, a cross-linking agent or the like thereto, the crystallization enthalpy can be adjusted. As the addition amount of the plasticizer, the cross-linking agent or the like is made larger, the crystallization enthalpy can be made lower. By an appropriate addition of these agents, a resin as satisfying the above-mentioned requirement ranges may be produced.

In the white film of the invention, the resin species constituting the matrix may be a mixture of a crystalline resin and a non-crystalline resin. In this case, it is preferred from the viewpoint of thermostability and tensile strength that when the amount of all resins (including the resin particles) constituting the S layer is defined as 100% by weight, the proportion of the crystalline resin (A) (when plural crystalline resins are present, the proportion is that of the total weight of all the crystalline resins) constituting the matrix in the S layer is set to 50% or more by weight.

In the white film of the invention, it is preferred that the resin particles, wherein voids are caused to be formed, are a resin incompatible with the crystalline resin (A) constituting the film (incompatible resin (B)). The incompatible resin (B) is a resin which is incompatible with the matrix made of at least the crystalline resin (A) and is dispersed in a fine form into the matrix. In the white film of the invention, it is preferred to disperse the incompatible resin into a fine form in the matrix, and then stretch the resultant dispersion, thereby making use of the resin as nuclei to form voids.

The incompatible resin (B) contained in the white film of the invention may be a crystalline resin or a non-crystalline resin as far as the resin satisfies the above-mentioned requirements. In the same manner as described about the definition of the crystalline resin (A), the crystalline resin referred to herein is a resin, of which an exothermic peak resulting from the crystallization thereof is observed in a differential scanning calorimetric chart which is obtained from a 2$^{nd}$ run by the method to be described later in accordance with JIS K7122(1999). More specifically, a resin, of which

the crystallization enthalpy ΔHcc obtained from the area of the exothermic peak is 1 J/g or more is defined as the crystalline resin. The non-crystalline resin is a resin, of which an exothermic peak resulting from the crystallization thereof is not observed, or a resin, of which the crystallization enthalpy is less than 1 J/g even if such an exothermic peak is observed.

When the incompatible resin (B) is a non-crystalline resin (B1), the glass transition temperature Tg1 of the non-crystalline (B1) is preferably 170°C or higher. The glass transition temperature Tg1 of the non-crystalline (B1) is the glass transition temperature Tg1 in a temperature-raising process (temperature-raising rate: 20°C/min) which is obtained by differential scanning calorimetry (hereinafter referred to as DSC), and is a value obtained from the following point in a stepwise-changed region of the glass transition in a differential scanning calorimetric chart which is obtained from a $2^{nd}$ run in the same manner as described above in accordance with the method based on JIS K-7122(1999): a point at which a straight light having an equal distance, in the vertical axis direction, from straight lines extended from individual base lines intersects with a curve of the stepwise-changed region of the glass transition. The glass transition temperature Tg1 is more preferably 180°C or higher, even more preferably 185°C or higher.

If the glass transition temperature Tg1 of the non-crystalline (B1) is lower than 170°C in the white film of the invention, at the time of subjecting the film to thermal treatment for giving dimensional stability thereto the incompatible resin (B1), which is a nucleus material, deforms so that voids formed using it as a nucleus are decreased or lost. Thus, the reflection property may decline. When the heatset temperature is made low to make an attempt for keeping the reflection property, the dimensional stability of the film may unfavorably deteriorate. By setting the glass transition temperature Tg1 of the non-crystalline resin (B1) to 170°C or higher in the white film of the invention, a high reflectance and a high dimensional stability can be made compatible with each other.

The upper limit of the glass transition temperature of the non-crystalline resin (B1) is not particularly specified in the white film of the invention. The upper limit is preferably the melting point Tm of the crystalline resin (A) minus 5°C, or lower, more preferably Tm-10°C, or lower, even more preferably Tm-20°C, or lower. If the glass transition temperature Tg1 of the non-crystalline resin (B1) is higher than Tm-5°C in the white film of the invention, the incompatible resin (B1) is not sufficiently softened when the resin is melt-kneaded with the crystalline resin (A), which is to be the matrix. Thus, it appears that the dispersion of the incompatible resin (B1) into a fine form is not promoted.

When the incompatible resin (B) is a crystalline resin (B2) in the white film of the invention, the melting point Tm2 of the crystalline resin (B2) is preferably 170°C or higher. The melting point Tm2 of the crystalline resin (B2) is the melting point Tm in a temperature-raising process (temperature-raising rate: 20°C/min). The melting point Tm2 of the crystalline resin (B2) is the peak top temperature of a crystal fusion peak in a differential scanning calorimetric chart thereof that is obtained from a $2^{nd}$ run by the method to be described later in accordance with the method based on JIS K-7121 (1999). The melting point Tm2 of the crystalline resin (B2) is more preferably 180°C or higher, even more preferably 185°C or higher.

If the melting point Tm T2 of the crystalline resin (B2) is lower than 170°C in the white film of the invention, the incompatible resin (B2), which is a nucleus material, melts when the film is subjected to thermal treatment to give dimensional stability thereto. As a result, voids formed using it as nuclei are decreased or lost so that the reflection property may decline. When the heatset temperature is made low to make an attempt for keeping the reflection property, the dimensional stability of the film may unfavorably deteriorate. By setting the melting temperature Tm2 of the crystalline resin (B2) to 170°C or higher in the white film of the invention, a high reflectance and a high dimensional stability can be made compatible with each other

The upper limit of the melting temperature Tm2 of the crystalline resin (B2) is not particularly specified in the white film of the invention. The upper limit is preferably the melting point Tm of the crystalline resin (A) minus 5°C, or lower, more preferably Tm-10°C, or lower, even more preferably Tm-20°C, or lower. If the glass transition temperature Tm2 of the crystalline resin (B2) is higher than Tm-5°C in the white film of the invention, the incompatible resin (B2) is not sufficiently softened when the resin is melt-kneaded with the crystalline resin (A), which is to be the matrix. Thus, it appears that the dispersion of the incompatible resin (B2) into a fine form is not promoted.

In the white film of the invention, the incompatible resin (B) is preferably a resin satisfying the above-mentioned requirements. Specific examples thereof include copolymerized polyester resins, linear, branched or cyclic polyolefin resins such as polyethylene, polypropylene, polybutene, polymethylpentene and cyclopentadiene, polyamide resins, polyimide resins, polyether resins, polyester amide resins, polyether ester resins, acrylic resins, polyurethane resins, polycarbonate resins, polyvinyl chloride resins, polyacrylonitrile, polyphenylene sulfide, polystyrene, and fluorine-contained resins. The incompatible resin (B) is in particular preferably made mainly of a thermoplastic resin selected from polyester resins, polyolefin resins, polyamide resins or acrylic resins, or mixtures thereof, out of the above-mentioned resins, since monomer species copolymerizable therewith are diverse and the adjustment of physical properties of the materials is made easy by the diversity. These incompatible resins may each be a homopolymer or a copolymer. Two or more of the incompatible resins may be used together.

When a polyester resin is used as the matrix, preferred specific examples of the incompatible resin (B) include polyolefin resins, polyamide resins, polyimide resins, polyether resins, polyester amide resins, polyether ester resins,

acrylic resins, polyurethane resins, polycarbonate resins, and polyvinyl chloride resins. Of these examples, the following are preferably used as the incompatible resin (B): linear, branched or cyclic polyolefin resins such as polyethylene, polypropylene, polybutene, polymethylpentene and cyclopentadiene, acrylic resins such as poly(meth)acrylate, polystyrene, fluorine-contained resins, and others. These incompatible resins may each be a homopolymer or a copolymer. Two or more of the incompatible resins may be used together. Of these examples, polyolefin resins small in surface tension are preferably used since the void-forming performance is excellent. Specifically, when the incompatible resin (B) contained in the white film of the invention is the crystalline resin (B2), polypropylene or polymethylpentene is preferably used. Polymethylpentene is relatively large in surface tension difference from polyester so that the polymer is excellent in void-forming performance and the effect of forming voids per addition amount thereof is large. Additionally, the melting point is high so that the polymer is not easily deformed by thermal treatment. Thus, when the film is produced, thermal treatment is sufficiently applied thereto. As a result, the polymer has a feather of heightening the tensile strength and the dimensional stability of the formed film. For these reasons, the polymer is in particular preferred as the crystalline resin (B2).

The polymethylpentene is preferably a polymethylpentene species having, in the molecular skeleton thereof, a derivative unit from 4-methylpentene-1, preferably in an amount of 80% or more by mole, more preferably in that of 85% or more by mole, and in particular preferably in that of 90% or more by mole. Examples of a different derivative unit include an ethylene unit, a propylene unit, a butene-1 unit, a 3-methylbutene-1, and any hydrocarbon that has 6 to 12 carbon atoms and is other than 4-methylpentene-1. The polymethylpentene is a homopolymer or a copolymer. Plural polymethylpentene species different from each other in composition or apparent melt viscosity may be used, or the polymethylpentene may be used together with some other olefin resin or resin.

When the incompatible resin (B) used in the white film of the invention is the non-crystalline resin (B1), a cyclic-olefin copolymer is in particular preferably used. The cyclic-olefin copolymer is a copolymer composed of at least one cyclic-olefin selected from the group consisting of cycloalkenes, bicycloalkenes, tricycloalkenes, and tetracycloalkenes, and a linear olefin such as ethylene or propylene. Typical examples of the cyclic-olefin include bicyclo[2,2,1]hept-2-ene, 6-methylbicyclo[2,2,1]hept-2-ene, 5,6-dimethylbicyclo[2,2,1]hept-2-ene, 1-methylbicyclo[2,2,1]hept-2-ene, 6-ethylbicyclo[2,2,1]hept-2-ene, 6-n-butylbicyclo[2,2,1]hept-2-ene, 6-i-butylbicyclo[2,2,1]hept-2-ene, 7-methylbicyclo[2,2,1]hept-2-ene, tricyclo[4,3,0,$1^{2,5}$]-3-decene, 2-methyl-tricyclo[4,3,0,$1^{2,5}$]-3-decene, 5-methyl-tricyclo[4,3,0,$1^{2,5}$]-3-decene, tricyclo[4,4,0,$1^{2,5}$]-3-decene, and 10-methyl-tricyclo[4,4,0,$1^{2,5}$]-3-decene.

Particularly preferred is bicyclo[2,2,1]hept-2-ene (norbornene) or a derivative thereof from the viewpoint of productivity, transparency, and easiness of a raise in the Tg to a high temperature.

When the incompatible resin (B) is the non-crystalline resin (B1) in the white film of the invention, the use of a cyclic-olefin copolymer as described above makes it possible to disperse the resin in a finer form into the film than by use of any conventionally used incompatible resin such as polymethylpentene, polypropylene or polystyrene. As a result, a large number of gas-solid interfaces can be formed in the thickness direction of the film to give a high reflection property, whiteness and concealing property which conventional white films cannot reach. In the case of using the white film, in particular, as a reflection film for liquid crystal display, the utilization efficiency of light can be made high. As a result, a high brightness enhanced effect which cannot be obtained by conventional white films can be obtained.

In order to control the glass transition temperature Tg1 of the non-crystalline resin (B1) into the above-mentioned range, the content by percentage of the cyclic-olefin component (s) in the cyclic-olefin copolymer is made large and the content by percentage of the linear olefin component such as ethylene is made small. Specifically, the content by percentage of the cyclic-olefin component (s) is preferably 60% or more by mole, and that of the linear olefin component such as ethylene is preferably less than 40% by mole. More preferably, the content by percentage of the cyclic-olefin component (s) is 70% or more by mole, and that of the linear olefin component such as ethylene is less than 30% by mole. Even more preferably, the content by percentage of the cyclic-olefin component(s) is 80% or more by mole, and that of the linear olefin component such as ethylene is less than 20% by mole. In particular preferably, the content by percentage of the cyclic-olefin component(s) is 90% or more by mole, and that of the linear olefin component such as ethylene is less than 10% by mole. When the contents by percentage are set into the ranges, the glass transition temperature of the cyclic-olefin copolymer can be heighten into a glass transition temperature Tg1 in the above-mentioned range.

The linear olefin component is not particularly limited, and is preferably an ethylene component from the viewpoint of reactivity.

The cyclic-olefin component(s) is/are not particularly limited, and is/are (each) preferably bicyclo[2,2,1]hept-2-ene (norbornene), or a derivative thereof from the viewpoint of productivity, transparency, and a raise in the Tg to a high temperature.

If necessary, a copolymerizable unsaturated monomer component other than the above-mentioned two component species may be copolymerized therewith as far as the object of the invention is not damaged. Examples of the copolymerizable unsaturated monomer include $\alpha$-olefins having 3 to 20 carbon atoms, such as propylene, 1-butene, 4-methyl-1-pentene, 1-hexene, 1-octene, 1-decene, 1-dodecene, 1-tetradecene, 1-hexadecene, 1-octadecene and 1-eicocene, cyclopentene, cyclohexane, 3-methylcyclohexene, cyclooctene, 1,4-hexadiene, 4-methyl-1,4-hexadiene, 5-methyl-1,4-hexadiene, 1,7-octadiene, dicyclopentadiene, 5-ethylidene-2-norbornene, 5-vinyl-2-norbornene, tetracyclododecene, 2-methyltetracyclododecene, and 2-ethyltetracyclododecene.

When the total amount of all materials constituting the S layer is regarded 100% by weight in the white film of the invention, the incompatible resin (B) is contained preferably in an amount of 5 to 50% by weight. The addition amount of the incompatible resin (B) is preferably 10% or more by weight, more preferably 15% or more by weight, even more preferably 20% or more by weight. If the addition amount of the incompatible resin (B) is less than 5% by weight in the white film of the invention, the whiteness or the light reflection property may be poor. On the other hand, if the amount is more than 50% by weight out of 100% by weight of the total of all the materials constituting the S layer, the strength of the film lowers so that the film may easily be torn when the film is stretched. When the content by percentage is set into the range, a sufficient whiteness, reflectivity and lightweightness can be expressed.

When the crystalline resin (A) is a polyester in the invention, a copolymerized polyester resin (C), wherein a copolymerizable component is introduced, may be incorporated, for the matrix, into the crystalline resin (A). In this case, the amount of the copolymerizable component is not particularly limited. A dicarboxylic acid component thereof and a diol component thereof are each preferably from 1 to 70% by mole of the individual components, more preferably from 10 to 40% by mole thereof from the viewpoint that the copolymerized polyester resin is made non-crystalline, which will be described next, as well as the viewpoint of transparency, moldability and others.

In a preferred embodiment of the white film of the invention, a polyester made non-crystalline by copolymerization is used as the copolymerized resin (C). Preferred examples of the polyester made non-crystalline include copolymerized polyester resin the diol component of which is made mainly of an alicyclic glycol, and copolymerized polyester resin the acid component of which is isophthalic acid. The following can be in particular preferably used from the viewpoint of transparency and moldability, and that of the effect of dispersing the incompatible resin (B) into a fine form, which will be described later: copolymerized, non-crystalline polyester the diol component of which is cyclohexanedimethanol, which is a species of alicyclic glycol. In this case, it is preferred from the viewpoint of non-crystallization to set the amount of the cyclohexanedimethanol component of the diol component of the copolymerized, non-crystalline polyester resin to 30% or more by mole. Particularly preferred is a cyclohexanedimethanol-copolymerized polyethylene terephthalate wherein cyclohexanedimethanol is used for 30 to 40% by mole of the diol component of the terephthalate, ethylene glycol is used for 60 to 70% by mole of the diol component thereof, and terephthalic acid is used as the dicarboxylic acid component thereof.

The addition of this copolymerized, non-crystalline polyester produces an advantageous effect of making the dispersion of the incompatible resin (B) in the matrix resin more stable to attain the dispersion thereof into a fine form. A detailed reason why this advantageous effect is expressed is unclear; however, this makes it possible to generate a great number of voids in the film to attain a high reflectivity, a high whiteness, and lightweightness. Moreover, the addition of this non-crystalline polyester can produce an improvement in the stretchability and the film-formability.

When the amount of all resins constituting the matrix in the S layer, which contain the resin particles (II), is regarded as 100% by weight, the content by percentage of the copolymerized resin (C) in the white film of the invention is 5% or more by weight and less than 50% by weight of the resins. The content by percentage is more preferably 10% or more by weight and less than 40% by weight, more preferably 10% or more by weight and less than 35% by weight. If the content by percentage of the copolymerized resin (C) contained in the matrix is less than 10% by weight, it may unfavorably become to disperse the incompatible resin (B) in a fine form into the matrix. If the content by percentage of the copolymerized resin (C) is more than 50% by weight, the thermostability declines. Thus, when thermal treatment of the film is conducted to give dimensional stability thereto, the matrix softens. As a result, voids are decreased or lost so that the reflection property may deteriorate. When the heatset temperature is made low to make an attempt for maintaining the reflection property, the dimensional stability may unfavorably decline. When the addition amount of the copolymerized resin (C), relative to 100% by weight of all the resins constituting the matrix, which contain the resin particles, is controlled into the above-mentioned range in the white film of the invention, the film-formability, and the mechanical properties can be maintained while the above-mentioned effect of dispersing the incompatible component is sufficiently exhibited. As a result, a high reflectance and dimensional stability can be made compatible with each other.

In order to disperse the incompatible resin (B) in a finer form into the matrix in the white film of the invention, it is preferred to add, into the matrix, a dispersing agent (D) besides the crystalline resin (A) and the copolymerized resin (C).

The addition of the dispersing agent (D) makes it possible to make the dispersion diameter of the incompatible resin (B) smaller. As a result, oblate voids generated by stretching can be made finer, so as to improve the whiteness, reflection property and lightweightness of the film.

The kind of the dispersing agent (D) is not particularly limited. When the crystalline resin (A) is a polyester resin, the following may be used: an olefin polymer or copolymer having a polar group such as a carboxyl group or epoxy group, or a functional group reactive with the polyester; diethylene glycol; a polyalkylene glycol; a surfactant; a thermally adhesive resin; and others. Of course, these may be used alone or in combination of two or more thereof.

Particularly preferred is a polyester-polyalkyleneglycol copolymer (D1) composed of a polyester component and a polyalkylene glycol component.

In this case, the polyester component is preferably a polyester component made from an aliphatic diol moiety having 2 to 6 carbon atoms, and a terephthalic acid moiety and/or an isophthalic acid moiety. The polyalkylene glycol component is preferably polyethylene glycol, polypropylene glycol, polytetramethylene glycol, or some other component.

A particularly preferred example of the combination of the polyester component with the polyalkylene glycol component is a combination of polyethylene terephthalate or polybutylene terephthalate with polyethylene glycol or polytetramethylene glycol. The combination is in particular preferably a combination of polybutylene terephthalate as the polyester component with polytetramethylene glycol as the polyalkylene glycol component, or a combination of polyethylene terephthalate as the polyester component with polyethylene glycol as the polyalkylene glycol component.

The addition amount of the dispersing agent (D) used in the invention is not particularly limited. When the amount of all the resins constituting the matrix in the S layer, which contain the resin particles, is regarded as 100% by weight, the addition amount is preferably from 0.1 to 30% by weight, more preferably from 2 to 25% by weight, even more preferably from 5 to 20% by weight. If the addition amount is less than 0.1% by weight, the advantageous effect of making voids fine may unfavorably become small. If the addition amount is more than 30% by weight, the thermostability declines. Thus, when thermal treatment of the film is conducted to give dimensional stability thereto, the matrix softens. As a result, voids are decreased or lost so that the reflection property may deteriorate. When the heatset temperature is made low to make an attempt for maintaining the reflection property, the dimensional stability of the film may unfavorably decline. Additionally, a decline in the production stability, an increase in costs and other problems may be unfavorably caused. By controlling the addition amount of the copolymerized polyester to all the matrix components into the abode-mentioned range in the white film of the invention, the film-formability, and mechanical properties of the film can be maintained while the effect of dispersing the incompatible component (B) is sufficiently exhibited. As a result, a high reflectance and dimensional stability can be made compatible with each other. Additionally, a decline in the production stability, an increase in costs and other problems may be unfavorably caused.

In the white film of the invention, it is preferred that the apparent melt viscosity $\eta 1$ (Pa·s) of the crystalline resin (A) and the apparent melt viscosity $\eta 2$ (Pa·s) of the incompatible resin (B) at the melting point Tm of the crystalline resin (A) plus 20°C and a shear rate of 200 $sec^{-1}$ satisfy the following relationship: $-0.3 \leqq \log_{10}(\eta 2/\eta 1) \leqq 0.55$. The apparent melt viscosity $\eta 1$ (Pa·s) of the crystalline resin (A) and the apparent melt viscosity $\eta 2$ (Pa·s) of the incompatible resin (B), referred to herein, are each a value obtained by a method according to JIS K-7199 (1991), and are each a value obtained by the following steps 1) to 4):

1) When the crystalline resin (A) and the incompatible resin (B) have hydrolyzability, the resins are dried so as to turn the water content by percentage into 50 ppm or less.
2) The resins in the item 1) are each used to measure the apparent melt viscosity thereof at three or more different shear rates and at the temperature of the melting point Tm of the crystalline resin (A) plus 20°C.
3) The logarithms of the resultant values are each plotted in a table wherein the transverse axis represents the shear rate and the vertical axis represents the apparent melt viscosity. From the resultant plot, a power approximation curve is obtained.
4) From the resultant power approximation curve, the apparent melt viscosity at a shear rate of 200 $sec^{-1}$ is obtained.

The method for drying each of the resins may be a known method such as drying by heating using a hot wind oven, a hot plate, infrared rays or the like, vacuum drying, freeze drying, or a method wherein any ones thereof are combined with each other. In order to prevent the resin from absorbing humidity after the drying, the drying is carried out just before the measurement, and the measurement is made just after the end of the drying. If the measurement is not permitted to be made just after the drying, the sample is stored under drying conditions, dried nitrogen conditions, vacuum conditions, or other conditions for not permitting the sample to absorb humidity, in a desiccator, a storage or the like, up to a time just before the measurement.

The melting point Tm of the crystalline resin (A) is the melting point Tm in a temperature-raising step (temperature-raising rate: 20°C/min) which is obtained by differential scanning calorimetry (hereinafter referred to as DSC). The following is defined as the melting point Tm of the crystalline resin: the temperature of the peak top of a crystal fusion peak in a differential scanning calorimetric chart which is obtained from a $2^{nd}$ run in the manner to be described later in accordance with the method based on JIS K-7122(1999).

In the white film of the invention, it is preferred to set the apparent melt viscosity $\eta 1$ (Pa·s) of the crystalline resin (A) and the apparent melt viscosity $\eta 2$ (Pa·s) of the incompatible resin (B) at the melting point Tm of the crystalline resin (A, which is obtained by the above-mentioned method, plus 20°C and a shear rate of 200 $sec^{-1}$ so as to satisfy the following range: $-0.3 \leqq \log_{10}(\eta 2/\eta 1) \leqq 0.55$. More preferably, $-0.2 \leqq \log_{10}(\eta 2/\eta 1) \leqq 0.5$; even more preferably, $-0.1 \leqq \log_{10}(\eta 2/\eta 1) \leqq 0.45$; and in particular preferably, $0 \leqq \log_{10}(\eta 2/\eta 1) \leqq 0.40$. If the $\log_{10}(\eta 2/\eta 1)$ is more than 0. 55, the viscosity of the incompatible resin (B) is too high so that a sufficient shear is not easily applied to the incompatible resin

(B) at the time of the kneading. Thus, it may become difficult to make the dispersion diameter fine. If the $\log_{10}(\eta2/\eta1)$ is less than -0.3, the viscosity of the incompatible resin (B) is too low so that the kneading of the incompatible resin (B) into the matrix containing the crystalline resin (A), itself, may become difficult. By controlling the $\log_{10}(\eta2/\eta1)$ into the range of $-0.3\leqq\log_{10}(\eta2/\eta1)\leqq0.55$ in the white film of the invention, the kneadability and the dispersibility into a fine form can be made compatible with each other.

In the white film of the invention, it is also preferred to set the apparent melt viscosity η1 (Pa·s) of the crystalline resin (A) and the apparent melt viscosity η2 (Pa·s) of the incompatible resin (B) at the melting point Tm of the crystalline resin (A) plus 20°C and a shear rate of 200 $sec^{-1}$ so as to satisfy the following relationship: $0.5\leqq \log_{10}(\eta2)/\log_{10}(\eta1)\leqq1.3$. More preferably, $0.8\leqq \log_{10}(\eta2)/\log_{10}(\eta1)\leqq1.3$; even more preferably, $0.9\leqq \log_{10}(\eta2)/\log_{10}(\eta1)\leqq1.25$; in particular preferably, $0.95\leqq \log_{10}(\eta2)/\log_{10}(\eta1)\leqq1.20$; and most preferably, $0.95\leqq \log_{10}(\eta2)/\log_{10}(\eta1)\leqq1.15$. If the $\log_{10}(n2)/\log_{10}(\eta1)$ is more than 1.3, the viscosity of the incompatible resin (B) is too high so that a sufficient shear is not easily applied to the incompatible resin (B) at the time of the kneading. Thus, it may become difficult to make the dispersion diameter fine. If the $\log_{10}(\eta2)/\log_{10}(\eta1)$ is less than 0.5, the viscosity of the incompatible resin (B) is too low so that the kneading of the incompatible resin (B) into the matrix containing the crystalline resin (A), itself, may become difficult. By controlling the $\log_{10}(\eta2)/\log_{10}(\eta1)$ into the range of $0.5\leqq \log_{10}(\eta2)/\log_{10}(\eta1)\leqq1.3$, the kneadability and the dispersibility into a fine form can be made compatible with each other.

When a thermoplastic resin is used for the resin particles in the white film of the invention, it is preferred to set the difference between the apparent melt viscosity η1 of the crystalline resin (A) and the apparent melt viscosity η2 of the incompatible resin (B), η2-η1, at the melting point Tm of the crystalline resin (A) plus 20°C and a shear rate of 200 $sec^{-1}$ into the range of -300 to 1000 Pa·s.

The value η2-η1 is more preferably from -200 to 800 Pa·s, more preferably -100 to 700 Pa·s, and in particular preferably -50 to 600 Pa·s. If the η2-η1 is more than 1000 Pa·s, the viscosity of the incompatible resin (B) is too high so that the resin is not easily dispersed in a fine form into the matrix. Moreover, the viscosity of the crystalline resin (A) is too low so that the tensile strength of the formed sheet may unfavorably fall. If the η2-η1 is less than -300 Pa·s, the viscosity of the incompatible resin (B) is too low so that the kneading of the resin (B) into the matrix containing the crystalline resin (A), itself, may become difficult. Moreover, the viscosity of the crystalline resin (A) is too high so that the film materials containing the resin (A) are not easily extruded. Thus, the film materials may not be made into a sheet form with ease. By setting the difference between the apparent melt viscosity η1 of the crystalline resin (A) and the apparent melt viscosity η2 of the incompatible resin (B), η2-η1, into the range of -300 to 1000 Pa·s in the white film of the invention, the kneadability, the dispersibility into a fine form and the film-formability, and the tensile strength of the formed film can be made compatible with each other.

The apparent melt viscosity η1 of the crystalline resin (A) is set preferably into the range of 50 to 3000 Pa·s, more preferably into that of 80 to 2000 Pa·s, and even more preferably into that of 100 to 1000 Pa·s. If the η1 is more than 3000 Pa·s, the polymerization thereof may become difficult or even when the polymerization is attained, the viscosity of the resin is too high so that the film materials containing the resin are not easily extruded. If the η2 is less than 50 Pa·s, shear is not easily applied to the film materials when the film materials are kneaded, so that coarse particles remain easily therein. Moreover, when the film materials are formed into a film, the materials easily involve voids so that the materials are not easily made into a sheet form. Even when the film materials can be formed into a sheet form, the tensile strength thereof may decline. By setting the apparent melt viscosity η1 of the crystalline resin (A) into the range of 50 to 3000 Pa·s in the white film of the invention, the film-formability for the white film and the tensile strength of the white film can be made compatible with each other.

By setting the apparent melt viscosity η1 of the crystalline resin (A) to 300 Pa·s or more, molecular chains thereof are intensely entangled with each other so that the film-formability. Thus, when formed into a film, the film materials are less torn. As a result, the materials can be formed with a good film-formability into a white film. When the apparent melt viscosity is set to 400 Pa·s or less, internal stress less remains at the time of stretching the film materials. Thus, a white film lower in heat shrinkage can be formed.

The apparent melt viscosity η2 of the incompatible resin (B) is set preferably into the range of 10 to 2000 Pa·s, more preferably in that of 20 to 1500 Pa·s, even more preferably in that of 20 to 1000 Pa·s, and in particular preferably in that of 50 to 800 Pa·s. If the η2 is more than 2000 Pa·s, the viscosity of the crystalline resin (A) needs to be made high in order to set the apparent melt viscosity η1 of the crystalline resin (A) and the incompatible resin (B) n2 so as to satisfy the above-mentioned viscosity relationship. Thus, the polymerization thereof may become difficult, or even when the polymerization is attained, the viscosity of the resin so that the film materials containing the resin are not easily extruded. If the n2 is less than 10 Pa·s, the viscosity of the crystalline resin (A) needs to be made low in order that the above-mentioned relationship between the apparent melt viscosity η1 of the crystalline resin (A) and the incompatible resin (B) η2 can be satisfied. Thus, when the film materials are formed into a film, the materials easily involve voids so that the materials are not easily made into a sheet form. Even when the film materials can be formed into a sheet form, the tensile strength thereof may unfavorably decline. By setting the apparent melt viscosity n2 of the incompatible resin (B) into the range of 10 to 2000 Pa·s in the white film of the invention, the film-formability for the white film and the tensile

strength of the white film can be made compatible with each other.

If necessary, an appropriate additive may be incorporated into the white film of the invention in an amount not permitting the advantageous effects of the invention to be damaged, examples of the additive including a thermostabilizer, an anti-oxidant, an ultraviolet absorber, an ultraviolet stabilizer, an organic lubricant, organic fine particles, a filler, a nucleus agent, a dye, a dispersing agent, and a coupling agent.

The white film of the invention can be yielded by melt-kneading a crystalline resin (A), an incompatible resin (B), a copolymerized resin (C), and a dispersing agent (D), working the mixture into a sheet form, and then stretching the sheet biaxially.

The white film of the invention may a simple white film made only of the S layer. A preferred embodiment is a film having the S layer, which may be referred to as the A layer hereinafter, and a layer which is different from the A layer (B layer) and is laminated on at least one side of the A layer. By laminating this layer, which has a different function, thereon, the white film can have a function of controlling the light diffusibility of reflected light, giving a high tensile strength to the film or giving film-formability, or have some other function. The laminate structure thereof may be the following: A layer/B layer, or B layer/A layer/B layer.

When the white film of the invention has the laminate structure, it is preferred to add particles which may be of various types thereto in order to heighten the surface slippage property, or the running endurance when the film is formed. At this time, organic or inorganic fine particles, or an incompatible resin may be incorporated into the laminated B layer(s). The incorporation of inorganic fine particles, out of the these materials, is particularly preferred from the viewpoint of the windable-up property of the film, the film-formation stability over a long term, the stability over time, an improvement in optical properties, and others. As described above, the inorganic particles are larger in absorbancy and others than the resin particles and so on. Thus, when the inorganic particles are used in a large amount in the whole of the film or the main layer (A layer), the absorbing effect thereof makes it difficult that a high reflection property is obtained. However, when the inorganic particles are formed into a thin layer or thin layers as the B layer(s) on the surface (s), various properties can be given thereto while absorbance is restrained as much as possible. Examples of the inorganic fine particles include calcium carbonate, magnesium carbonate, zinc carbonate, titanium oxide, zinc oxide (zinc white), antimony oxide, cerium oxide, zirconium oxide, tin oxide, lanthanum oxide, magnesium oxide, barium carbonate, zinc carbonate, basic lead carbonate (lead white), barium sulfate, calcium sulfate, lead sulfate, zinc sulfate, calcium phosphate, silica, alumina, mica, mica titanium, talc, clay, kaolin, lithium fluoride, and calcium fluoride.

The inorganic fine particles may or may not have void-forming property. The void-forming property depends on the difference thereof from the resin (polyester resin) constituting the matrix in surface tension, the average particle diameter of the inorganic fine particles or the aggregatability (dispersibility) thereof, and others. Typical examples of the inorganic fine particles having void-forming property, out of the above-mentioned inorganic fine particles, include calcium carbonate, barium sulfate, and magnesium carbonate. In the case of using particles having void-forming property, voids can be incorporated also into the laminated layer (s) by stretching, into at least one direction, the workpiece when the film is produced. As a result, the reflection property may be more favorably improved. In the meantime, inorganic fine particles having void-forming property are particles for whitening the film mainly by the difference thereof from the resin (polyester resin) constituting the matrix in refractive index. Typical examples thereof include titanium oxide, zinc sulfide, zinc oxide, and cerium oxide. When these are used, the concealing property of the white film can be improved.

These inorganic fine particle species may be used alone or in combination of two or more thereof. The particles may be in a porous or hollow porous form, or in some other form. Furthermore, as far as the advantageous effects of the invention are not damaged, the particles may be subjected to surface treatment in order to improve the dispersibility in the resin.

About the inorganic fine particles used in the invention, the average particle diameter in the B layer(s) is preferably from 0.05 to 3 $\mu$m, more preferably from 0.07 to 1 $\mu$m. If the average particle diameter of the inorganic fine particles is out of the range, the dispersibility of the inorganic fine particles into an even state may be made poor by the aggregation thereof or the like. Alternatively, the gloss or smoothness of the film surfaces may be deteriorated by the particles themselves.

The content by percentage of the inorganic fine particles in the B layer (s) is not particularly limited, and is preferably from 1 to 35% by weight, more preferably from 2 to 30% by weight and even more preferably from 3 to 25% by weight. If the content by percentage is smaller than the range, the whiteness, the concealing property (optical density) and other properties of the film are not easily improved. Contrarily, if the content by percentage is larger than the range, the smoothness of the film surfaces falls easily. Additionally, when the film is stretched, the film is torn, and when the film is subjected to post-processing, the generation of powder and other inconveniences may be caused.

The thickness of the white film of the invention is preferably from 10 to 500 $\mu$m, more preferably from 20 to 300 $\mu$m. Similarly, the thickness of the S layer is preferably from 10 to 500 $\mu$m, more preferably from 20 to 300 $\mu$m. If each of the thicknesses is less than 10 $\mu$m, the flatness or smoothness of the film is not easily kept. Thus, when the film is used for a surface light source, the brightness easily becomes uneven. On the other hand, if the thickness is more than 500 $\mu$m, at the time of using the film as an optical reflection film in a liquid crystal display the thickness thereof may

become too large.

When the white film of the invention of the invention is a laminate film, the ratio by thickness of its surface region to its inner layer (S layer) is preferably from 1/200 to 1/3, more preferably from 1/50 to 1/4. When the white film is a tri-layered laminate film of its surface layer region/its inner layer (S layer) /its surface layer region, the ratio by thickness is represented as the ratio by thickness of the whole of both the surface layer regions to the inner layer (S layer).

In order to give easy bondability, antistatic property, and others to the white film of the invention, it is allowable to use a well-known technique to paint a painting solution that may be of various kinds thereon, or lay a layer having a different function (C layer) thereon, examples of the layer including a hard coat layer for making the impact resistance high, an ultraviolet resisting layer having ultraviolet resistance, and a flame resistant layer for giving flame resistance.

About the white film of the invention, the white film and/or its painted layer may contain therein a photostabilizer. The photostabilizer referred to herein is an agent having ultraviolet absorbency. By incorporating this into the white film and/or the painted layer, a change in the color tone of the film is prevented. A preferably used photostabilizer is not particularly limited as far as the agent does not damage other properties. It is desired to select a photostabilizer which is excellent in thermostability and good in compatibility with the resin (s) which is/are to be the matrix so as to be evenly dispersed, and is less colored to produce no bad effect onto the reflection property of the resin(s) and that of the film. Examples of such a photostabilizer include salicylic acid based, benzophenone based, benzotriazole based, cyanoacrylate based, and triazine based ultraviolet absorbers, hindered amine ultraviolet stabilizers, and other ultraviolet stabilizers.

The white film of the invention has the above-mentioned structure, and the total transmittance of the white film is preferably 2. 5% or less, more preferably 2. 3% or less, and even more preferably 2.0% or less. The transmittance referred to herein is a value measured on the basis of JIS-7361 (1997). By setting the transmittance to 2.0% or less in the white film of the invention, light is prevented from penetrating the film toward its rear surface. As a result, the white film can be rendered a white film excellent in whiteness and reflection property. In the case of using the film, in particular, for a liquid crystal display device, a high brightness enhanced effect can be obtained.

The relative reflectance of the white film of the invention is preferably 100% or more, more preferably 100.5% or more, and even more preferably 101% or more. The relative reflectance referred to herein is the relative reflectance obtained in the case of using an integrating sphere the inner surface of which is made of barium sulfate, a spectrometer equipped with a 10°-inclined spacer, and aluminum oxide for a standard white plate to measure the reflectance at a wavelength of 560 nm when light is emitted into the film at an incident angle of 10°, and then comparing the measured value with the reflectance of the standard white plate, which is regarded as 100%. By setting the relative reflectance to 100% or more in the white film of the invention, the film can be rendered as a white film excellent in whiteness and reflection property. In the case of using the film, in particular, for a liquid crystal display device, a high brightness enhanced effect can be obtained.

In order to adjust the total transmittance and the relative reflectance of the white film of the invention into the above-mentioned ranges, the following and others may be performed: 1) the dispersion diameter and the density of the resin particles in the S layer are controlled into the above-mentioned ranges, and 2) the thickness of the S layer is made large. About conventional white films, the method for adjusting the relative reflectance into the above-mentioned range is only a method of making the film thickness large. About the white film of the invention, by controlling the dispersion diameter and the density of the resin particles in the film into the above-mentioned ranges, the white film can be rendered a white film having a high concealing property and a high reflection property which conventional white films cannot attain even when the film is thinner than the conventional films.

Specifically, the white film of the invention satisfies the above-mentioned transmittance and reflectance preferably when the thickness is 300 μm or less, more preferably when the thickness is 250 μm or less, and even more preferably when the thickness is 225 μm or less. In a case where the white film of the invention satisfies the transmittance and the reflectance when the film has the above-mentioned thickness, the white film can be rendered a white film having a high reflection performance even when this film is thinner. As a result, in the case of using the white film as, for example, a reflection member of a liquid crystal display, compatibility can be attained between a high brightness enhanced effect and an attempt for a reduction in the thickness of the display.

The specific gravity of the white film of the invention is preferably 1.2 or less. The specific gravity referred to herein is a value obtained on the basis of JIS K 7112 (1980 version). The specific gravity is more preferably 1.1 or less, even more preferably 1.0 or less. If the specific gravity is more than 1.2, the occupation ratio of the gas layer is too low so that the reflectance lowers. When the white film is used as a reflection plate for a surface light source, the brightness unfavorably tends to be insufficient. The lower limit of the specific gravity is 0.3 or more, more preferably 0.4 or more. If the lower limit is less than 0.3, the tensile strength is insufficient as a property for the film, the film is easily bent so as to be poor in handleability and other problems may be caused.

The following will describe an example of a method for producing the white film of the invention. However, the invention is not limited only to the example.

A mixture containing a chip of a crystalline resin (A) and resin particles (incompatible resin (B) incompatible

with the crystalline resin (A), which have the above-mentioned viscosity relationship, is sufficiently vacuum-dried as the need arises, and supplied into a heated extruder (main extruder) of a film-forming apparatus. The addition of the incompatible resin (B) may be attained by using a master chip produced by blending based on advance melt-kneading into an even state, by direction supply thereof into the kneading extruder, or by some other method. When the resin particles are crosslinkable resin particles, it is more preferred from the viewpoint of kneadability into an even state to use a substance obtained by pulverizing the components other than the incompatible resin (B) in advance.

When the white film of the invention is a laminate film, a composite-film-forming apparatus having an auxiliary extruder besides a main extruder as described above is used, and a chip of a thermoplastic resin vacuum-dried sufficiently as the need arises, inorganic particles, a fluorescent brightening agent, and others are supplied to the auxiliary extruder, which has been heated. In this way, these materials are co-extruded so as to be laminated.

When the mixture is melt-extruded, it is preferred that the mixture is filtrated through a filter having a mesh of 40 μm or less and subsequently the mixture is introduced into a T-die mouthpiece and then extruded and molded to yield a melt sheet.

This melt sheet is caused to adhere closely onto a drum, the surface temperature of which is cooled into the range of 10 to 60°C, by static electricity, and then cooled to be solidified. In this way, a non-stretched film is formed. The non-stretched film is introduced into a group of rolls heated to a temperature of 70 to 120°C, and stretched 3 to 4 times in the longitudinal direction (machine direction, that is, the film-advancing direction). The film is then cooled through a group of rolls having a temperature of 20 to 50°C.

Subsequently, the film is introduced into a tenter while both ends of the film are grasped with clips. The film is then stretched 3 to 4 times in a direction perpendicular to the longitudinal direction (in the width direction) in an atmosphere heated to a temperature of 90 to 150°C.

The stretch ratios (draw ratios) in the longitudinal direction and in the width direction are each from 3 to 5. The area ratio (the longitudinal direction stretch ratio x the transverse stretch ratio) thereof is preferably from 9 to 15. If the area ratio is less than 9, the reflectance, the concealing property and the film strength of the resultant biaxially stretched film tend to be insufficient. Contrarily, if the area ratio is more than 15, the film tends to be easily torn when stretched.

In order to complete the crystal-orientation of the resultant biaxially stretched film to give flatness and dimensional stability thereto, the film is subsequently subjected to thermal treatment at a temperature of 150 to 240°C in the tenter for 1 to 30 seconds. The film is evenly and slowly cooled, and then cooled to room temperature. Thereafter, the film is optionally subjected to corona discharge treatment or the like to make the adhesive property thereof onto other materials higher. The film is then wound up. In this way, a white film of the invention can be obtained. In the thermal treatment step, the film may be subjected to treatment for 3 to 12% relaxation in the width direction or longitudinal direction as the need arises.

As the heatset temperature is higher, the thermal dimensional stability is generally higher; it is preferred that the white film of the invention is subjected to thermal treatment at a high temperature (190°C or higher) in the film-forming process. A reason therefor is that it is desired that the white film of the invention has a given thermal dimensional stability. The white film of the invention may be used as a reflection film of a surface light source mounted in a liquid crystal display; another reason therefor is that in accordance with the type of the backlight, the temperature of the atmosphere in the backlight may rise up to about 100°C.

In particular, by setting the glass transition temperature Tg1 of the non-crystalline resin (B1) and/or the melting point Tm2 of the crystalline resin (B2) into the above-mentioned range(s), the cyclic-olefin copolymer, which is a void nucleus agent, is less thermally deformed (less broken) even when the copolymer undergoes thermal treatment at high temperature. Thus, firm voids can be maintained, so that a film can be favorably yielded which exhibits an excellent thermal dimensional stability as well as keeps a high whiteness, a high light reflectivity, and lightweightness.

The method for the biaxial stretching may be sequential stretching or simultaneous biaxial stretching. When the simultaneous biaxial stretching is used, the film can be prevented from being torn in the production process, and there is not easily generated a transfer drawback caused by a matter that the film adheres onto the heating roll. After the biaxial stretching, the film may be again stretched in the longitudinal direction or the width direction.

In order to give an electromagnetic wave shielding performance or bending workability to the white film of the invention, or attain some other purpose, a metallic layer made of aluminum, silver or the like may be added to a surface or each surface of the film by metal vapor deposition, adhesion, or some other method.

The white film of the invention is preferably used as a plate-form member to be integrated into a surface light source in order to reflect light. Specifically, the white film is preferably used as an edge-light-reflecting reflection plate for a liquid crystal screen, a reflection plate of a direct light type surface light source, a reflector around a cold cathode fluorescent lamp, or the like.

When the above are summarized, the material composition of the S layer in the invention is as follows:

(1) As a main resin for a matrix, polyethylene terephthalate, which is a crystalline resin (A), is used. The content by percentage of the crystalline resin (A) in the S layer is from 40 to 70% by weight. The η1 of the crystalline resin is

from 100 to 1000 Pa·s.

(2) For resin particles, a cyclic-olefin copolymer is used, which is a resin (B) incompatible with the crystalline resin and is a non-crystalline resin (B1). The glass transition temperature Tg thereof is 180°C or higher. The content by percentage of the non-crystalline resin (B1) in the S layer is from 20 to 50% by weight. The $\eta 2$ of the crystalline resin is from 50 to 800 Pa·s.

(3) As one for the matrix, a cyclohexanedimethanol copolymerized polyethylene terephthalate is incorporated which is a copolymerized resin (C) and is a non-crystalline polyester resin wherein cyclohexanedimethanol is used for 30 to 40% by mole of diol components, ethylene glycol is used for 60 to 70% by mole of the diol components, and terephthalic acid is used as a dicarboxylic acid component. The content by percentage of the non-crystalline polyester resin in the S layer is from 10 to 35% by weight.

(4) As one for the matrix, a polyester-polyal kyleneglycol copolymer, which is a dispersing agent (D), is incorporated. The content by percentage of the dispersing agent (D) in the S layer is from 5 to 20% by weight.

(Measurement methods)

A. The crystallinity, the glass transition temperature, and the melting point of resins (JIS 7121-1999, and JIS 7122-1999):

About each resin, in accordance with JIS K7122 (1999), a differential scanning calorimeter "ROBOT DSC-RDC220" manufactured by Seiko Instruments Ltd., and a disc session "SSC/5200" for data analysis were used to obtain the crystallinity, the glass transition temperature and the melting point of the resin. The resin was weighed by 5 mg into a sample pan. In a first run at a temperature-raising rate of 20°C/min, the resin was heated from 25 to 300°C at a temperature-raising rate of 20°C/min. In this state, the resin was kept for 5 minutes. Next, the resin was rapidly cooled to 25°C or lower. The temperature of the resin was again raised up to 300°C at a temperature-raising temperature of 20°C/min. Any resin, of which an exothermic peak for crystallization was observed (that is, the crystallization enthalpy $\Delta Hcc$ obtained from the area of the crystallization exothermic peak was 1 J/g or more) in the resultant differential scanning calorimetric chart from a 2nd run, out of the resins, was defined as a crystalline resin. Any resin, of which no exothermic peak for crystallization was observed, out of the resins, was defined as a non-crystalline resin.

The glass transition temperature was obtained from the following point in a stepwise-changed region of the glass transition in the 2nd-run differential scanning calorimetric chart: a point at which a straight light having an equal distance, in the vertical axis direction, from straight lines extended from individual base lines intersects with a curve of the stepwise-changed region of the glass transition.

About the melting point of any crystalline resin, the temperature of the peak top of a crystal fusion peak in its differential scanning calorimetric chart from a 2nd run was defined as the melting point.

B. Apparent melt viscosity:

A flow tester CFT-500 model A (manufactured by Shimadzu Corp.) was used to measure the viscosity in a constant-temperature test. Specifically, each resin was pre-heated in a cylinder heated to the temperature of the melting point Tm of a crystalline resin (A) plus 20°C for 5 minutes, and then a piston (plunger) having a sectional area of 1 $cm^2$ was used to push out the heated resin from a mouthpiece having an opening 1 mm in diameter and 10 mm in length by a constant load. In this way, the apparent melt viscosity was obtained at a K factor of 1. Furthermore, the same measurement was repeated. The average value of the values obtained from the measurement made three times in total was calculated. Next, the load was varied and then the same measurement was made three times. Thereafter, logarithms of the apparent melt viscosities (unit: Pa·s) were plotted relatively to the shear rate (unit: $sec^{-1}$) to obtain a power approximation curve. From the resultant power approximation curve, the apparent melt viscosity at a shear rate of 200 $sec^{-1}$ was obtained by extrapolation. The resultant value was used as the apparent melt viscosity.

When the resin to be measured had hydrolyzability, the measurement was made using a product obtained by drying the resin into a water content by a proportion of 50 ppm or less.

C. The particle diameter d, the number-average particle size Dn, the volume-average particle size Dv, and the number of the particles per unit area, and the proportion of particles having a particle diameter d of 2 $\mu$m or more out of the resin particles:

A white film produced in each of Examples and Comparative Examples was cut out, and a microtome was used to cut out the film to give a cross section in the film TD direction (transverse direction) and one in the machine direction. Platinum and palladium were vapor-deposited thereon, and then a field emission scanning electron microscope "JSM-6700F" manufactured by JEOL Ltd., was used to take photographs with a magnification power of 3000 to 5000 times. From the resultant images, the number-average particle size Dn was obtained in accordance with the following steps 1) to 4):

1) About individual resin particles observed in the S layer section in any one of the images, the sectional area S thereof was obtained, and then the particle diameter d was calculated in accordance with the following expression (1):

$$d = 2 \times (S/\pi)^{1/2} \qquad (1)$$

wherein n represents the circular constant.

2) The resultant particle diameter d and the number n of the resin particles were used to calculate the Dn in accordance with the following expression (2):

$$Dn = \Sigma d/n \qquad (2)$$

wherein $\Sigma$d was the total sum of particle diameters in the observed section, and n was the total number of the particles in the observed section.

3) The Dv was calculated in accordance with the following expression (4):

$$Dv = \Sigma[4/3\pi \times (d/2)^3 \times d] / \Sigma[4/3\pi \times (d/2)^3] \qquad (4)$$

wherein n represents the circular constant.

4) The steps 1) to 3) were carried out at 5 points when the spot was varied. The average values thereof were defined as the number-average particle size Dn of the resin particles, and the volume-average particle size Dv thereof, respectively. The evaluation was made in an area of 2500 $\mu m^2$ or more per observed spot.

5) From the resultant number-average particle size Dn and volume-average particle size Dv, the ratio Dv/Dn was obtained.

6) The area of the observed region was obtained, and the number of the resin particles per unit area (1 $\mu m^2$) was obtained. The number of resin particles having a particle diameter d of 2 $\mu$m or more, out of the particles, was obtained, and then the proportion of the number of the resin particles having a particle diameter d of 2 $\mu$m or more to that of all the resin particles was calculated.

D. Relative reflectance:

In the state that a 60-diameter integrating sphere 130-0632 (Hitachi Ltd.) (its internal surface was made of barium sulfate) and a 10°-inclined spacer were fitted to a spectrometer U-3410 (Hitachi Ltd.), the light reflectance was measured at 560 nm. The light reflectance was obtained about each surface of each of the white films. A higher value out of the resultant values was defined as the reflectance of the white film. The used standard white plate was one (aluminum oxide) manufactured by Hitachi Instruments Service Co., Ltd., the component number of which was 210-0740.

E. Transmittance (concealing property):

A haze meter NDH-5000 (manufactured by Nippon Denshoku Industries Co., Ltd.) was used to measure the total transmittance in the film thickness direction. The transmittance was obtained about each surface of each of the white films, and a lower value out of the resultant values was defined as the transmittance of the white film.

F. Specific gravity:

Each of the white films was cut out to give a size of 5 cm x 5 cm, and the specific gravity thereof was measured, using an electronic specific gravity meter (manufactured by Mirage Trading Co., Ltd.) on the basis of JIS K7112 (1980 version). About the white film, 5 pieces were prepared. The specific gravity of each of the pieces was measured, and the average value thereof was defined as the specific gravity of the white film.

G. Thermostability:

Each of the white films was cut into the form of a strip 1 cm x 15 cm in size, and a mark was attached onto a position 2.5 cm inward from each of its ends along the longitudinal direction, and the width L0 therebetween was measured. Next, the sample was allowed to stand in a hot wind oven of 90°C for 30 minutes, and cooled. Thereafter, the distance L1 between the marks in the sample was obtained. In accordance with the following expression (5), the shrinkage of the sample was calculated.

$$S = (L0 - L1)/L0 \times 100 \qquad (5)$$

The measurement was made about each of the longitudinal direction and the width direction of the film. About three samples of the white film, the average values were calculated to give the respective heat shrinkages. The average value of the shrinkage in the longitudinal direction and that in the width direction was calculated to give the heat shrinkage S of the samples. The thermostability thereof was judged as follows:

The heat shrinkage S was:

0.5% or less: S,
more than 0.5% and 0.8% or less: A,
more than 0.8% and 1.0% or less: B, or
more than 1.0% : C.

H. Brightness:
Each of the white films produced in Examples and Comparative Examples was set as a reflection plate into a direct light type backlight (16 CCFLs; fluorescent lamp diameter: 3 mm, interval between the fluorescent lamps: 2. 5 cm, and distance between its milk-white plate and the fluorescent lamp: 1.5 cm) 20 inches in size. The milk-white plate was a plate RM401 (manufactured by Sumitomo Chemical Co., Ltd.). On the side above the milk-white plate were arranged a light diffusing sheet "LIGHT-UP" (registered trade name) GM3 (manufactured by Kimoto Co., Ltd.), and prism sheets BEFIII (manufactured by 3M) and DBEF-400 (manufactured by 3M).
Next, a voltage of 12 V was applied thereto so as to turn on the CCFLs. In this way, the present surface light source was activated. After 50 minutes, a color brightness meter BM-7/FAST (manufactured by Topcon Corp.) was used to measure the central brightness at a viewing angle of 1° and a backlight-brightness meter distance of 40 cm. In each of Examples and Comparative Examples, three samples were measured, and the average value of the individuals was calculated out. This was used as the brightness B1.
In the same manner, a reflection film was measured when this film was a white film "LUMIRROR" E6SL (manufactured by Toray Industries, Inc.) of 250 μm thickness. In this way, the brightness B2 thereof was obtained. The resultant value was used to calculate out the brightness enhanced ratio B in accordance with the following expression (6):

$$\text{Brightness enhanced ratio B (\%)} = 100 \times (B1 - B2)/B2 \qquad (6)$$

I. Stretchability:
When the films were formed in Examples and Comparative Examples, any film wherein stretch unevenness was hardly generated, out of the films, was ranked as S, any film wherein stretch unevenness was slightly generated was ranked as A, any film wherein stretch unevenness was somewhat generated but the unevenness was not perceptible in the film-forming process was ranked as B, and any film wherein stretch unevenness perceptible in the film-forming process was generated was ranked as C. For the mass production, the film-formability B or higher is required.
Stretch unevenness referred to herein denotes that in any stretched film, a region where the film thickness is extremely large and a region where that is extremely small are generated. In many cases, stretch unevenness is generated since the whole of the film is unevenly stretched without being evenly stretched in the stretching step. Various causes are assumed as causes for the stretch unevenness. In the case of the invention, stretch unevenness tends to be easily caused when the dispersion of an incompatible resin into a polyester resin component is instable. When the stretch unevenness is caused, the region where the film thickness is small and the region where that is large are different from each other in reflectance and others in many cases. Thus, some of the cases are unfavorable. In the measurement, the film thickness distribution of the film in the longitudinal direction was measured, and the stretchability was judged as follows:

The thickness unevenness was:

±5% or less: S,
more than ±5% and ±7.5% or less: A,

more than ±7.5% and ±10% or less: B, or
more than ±10%: C.

J. Film-formability:
When the films were formed in Examples and Comparative Examples, any film wherein film tears were hardly generated, out of the films, was ranked as S, any film wherein film tears were slightly generated was ranked as A, any film wherein film tears were somewhat generated was ranked as B, and any film wherein film tears were frequently generated was ranked as C. For the mass production, the film-formability B or higher is required. The film-formability A or higher produces an effect of making costs lower.

Examples

The invention will be specifically described by way of working examples and others; however, the invention is not limited thereto.

(Raw materials)

Crystalline resin (A-1):

A polyethylene terephthalate J125S (Mitsui Chemicals, Inc.) having an intrinsic viscosity of 0. 70 dL/g was used. The melting point Tm of this resin was measured. As a result, it was 250°C.

Crystalline resin (A-2):

Terephthalic acid and ethylene glycol were used as an acid component and a glycol component, respectively. Antimony trioxide (polymerization catalyst) was added thereto so as to give an antimony-atom-converted concentration of 300 ppm of polyester pellets to be obtained. In this way, polycondensation reaction was conducted to yield the polyethylene terephthalate pellets (PET), wherein the intrinsic viscosity was 0.63 dL/g and the amount of carboxyl terminal groups was 40 equivalents/ton. A differential calorimeter was used to measure the heat of fusion of crystal thereof. As a result, the resin was a crystalline polyester resin wherein the heat was 1 cal/g or more and the melting point was 250°C (A-2).

Crystalline resins (A-3) and (A-4):

Fractions of the crystalline resin (A-2) were each put into a rotary vacuum-machine (rotary vacuum drier) under conditions that the temperature was 220°C and the vacuum degree was 0.5 mmHg. While stirred, the resin fractions were heated for 10 and 20 hours, respectively, to yield polyethylene terephthalate pellets (PET) wherein the intrinsic viscosity was 0.80 dL/g and the carboxyl terminal group amount was 12 equivalents/ton, and polyethylene terephthalate pellets (PET) wherein the intrinsic viscosity was 1.0 dL/g and the carboxyl terminal group amount was 10 equivalents/ton, respectively. A differential calorimeter was used to measure the fusion heat of crystal of each of the resins. As a result, the resins were each a crystalline polyester resin wherein the heat was 1 cal/g or more and the melting point was 250°C (A-3) and (A-4). Crystalline resin (A-5):

By the same method for obtaining the crystalline resin (A-2), polyethylene terephthalate pellets (PET) were yielded wherein the intrinsic viscosity was 0.50 dL/g and the carboxyl terminal group amount was 40 equivalents/ton. A differential calorimeter was used to measure the heat of fusion of crystal thereof. As a result, the resin was a crystalline polyester resin wherein the heat was 1 cal/g or more and the melting point was 250°C (A-5).

About the crystalline resins A-1 to A-5, the melting points Tm and the apparent melt viscosities at the melting point Tm plus 20°C were measured. The measurements of the apparent melt viscosities were made after the resins were vacuum-dried at a temperature of 180°C for 3 hours. The results are shown in Table 2.

Incompatible resin (non-crystalline) (B1-1):

The following was used: a cyclic-olefin resin "TOPAS 6013" (manufactured by Nippon (transliterated) Polyplastics Co., Ltd.) having a glass transition temperature of 140°C and a melt viscosity rate of 14 mL/10-mim (260°C/2.16-kg). Incompatible resin (non-crystalline) (B1-2):

The following was used: a cyclic-olefin resin "TOPAS 6015" (manufactured by Nippon Polyplastics Co., Ltd.) having a glass transition temperature of 160°C and a melt viscosity rate of 4 mL/10-mim (260°C/2.16-kg).

Incompatible resin (non-crystalline) (B1-3):

The following was used: a cyclic-olefin resin "TOPAS 6017" (manufactured by Nippon Polyplastics Co., Ltd.) having a glass transition temperature of 180°C and a melt viscosity rate of 1.5 mL/10-mim (260°C/2.16-kg).

Incompatible resin (non-crystalline) (B1-4):

The following was used: a cyclic-olefin resin "TOPAS 6017" (manufactured by Nippon Polyplastics Co., Ltd.) having a glass transition temperature of 180°C and a melt viscosity rate of 4.5 mL/10-mim (260°C/2.16-kg).

Incompatible resin (non-crystalline) (B1-5):

The following was used: a cyclic-olefin resin "TOPAS 6018" (manufactured by Nippon Polyplastics Co., Ltd.) having a glass transition temperature of 190°C and a melt viscosity rate of 1.5 mL/10-mim (260°C/2.16-kg).

Incompatible resin (non-crystalline) (B1-6):

The following was used: a cyclic-olefin resin "TOPAS 6018X1 T4 Sack No. 32" (manufactured by Nippon Polyplastics Co. , Ltd.) having a glass transition temperature of 190°C and a melt viscosity rate of 2.0 mL/10-mim (260°C/2.16-kg). Incompatible resin (non-crystalline) (B1-7):

The following was used: a cyclic-olefin resin "TOPAS 6018X1 T2 Lot No. 060286" (manufactured by Nippon Polyplastics Co., Ltd.) having a glass transition temperature of 190°C and a melt viscosity rate of 3.0 mL/10-mim (260°C/2.16-kg). Incompatible resin (non-crystalline) (B1-8):

The following was used: a cyclic-olefin resin "TOPAS 6018X1 T5" (manufactured by Nippon Polyplastics Co., Ltd.) having a glass transition temperature of 190°C and a melt viscosity rate of 4.5 mL/10-mim (260°C/2.16-kg). Incompatible resin (non-crystalline) (B1-9):

The following was used: a cyclic-olefin resin "TOPAS 6018X1 T6 Sack No. 190" (manufactured by Nippon Polyplastics Co., Ltd.) having a glass transition temperature of 190°C and a melt viscosity rate of 7.0 mL/10-mim (260°C/2.16-kg). Incompatible resin (non-crystalline) (B-10):

The following was used: a cyclic-olefin resin "TOPAS 6018X1 T6 Sack No. 205" (manufactured by Nippon Polyplastics Co., Ltd.) having a glass transition temperature of 190°C and a melt viscosity rate of 10.0 mL/10-mim (260°C/2.16-kg). Incompatible resin (non-crystalline) (B1-11):

The following was used: a cyclic-olefin resin "TOPAS 6018X1 T6 Sack No. 220" (manufactured by Nippon Polyplastics Co., Ltd.) having a glass transition temperature of 190°C and a melt viscosity rate of 20.0 mL/10-mim (260°C/2.16-kg).

Incompatible resin (non-crystalline) (B1-12):

The following was used: a cyclic-olefin resin "TOPAS 6018X1 T7" (manufactured by Nippon Polyplastics Co., Ltd.) having a glass transition temperature of 190°C and a melt viscosity rate of 15.0 mL/10-mim (260°C/2.16-kg). Incompatible resin (non-crystalline) (B1-13):

The following was used: a cyclic-olefin resin "TOPAS 6018X1 T6 Sack No. 245" (manufactured by Nippon Polyplastics Co., Ltd.) having a glass transition temperature of 190°C and a melt viscosity rate of 80.0 mL/10-mim (260°C/2.16-kg).

The incompatible resins (non-crystalline) B1-1 to B-12 ("TOPAS 6013", "TOPAS 6015", "TOPAS 6017", and "TOPAS 6018") are each composed of a norbornene component and an ethylene component as illustrated by chemical formula 1.

[Chemical formula 1]

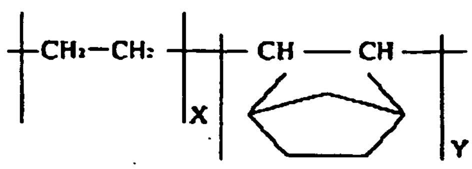

The compositions of the individual components are shown in Table 1. According to measurements using a

differential calorimeter, the resins were each a non-crystalline resin wherein the heat of fusion of crystal was less than 1 cal/g.

Incompatible resin (crystalline) (B2-1):

The following was used: a noncyclic polyolefin resin PMP (polymethylpentene) "TPX DX845" (Mitsui Chemicals, Inc.) having a melt flow rate of 8 g/10-mim (260°C/5.0-kg). A differential calorimeter was used to measure the heat of fusion of crystal thereof. As a result, the resin was a crystalline resin wherein the heat was 1 cal/g or more. The glass transition temperature was 25°C and the melting point was 235°C. Incompatible resin (crystalline) (B2-2):

The following was used: a noncyclic polyolefin resin PMP (polymethylpentene) "TPX DX820" (Mitsui Chemicals, Inc.) having a melt flow rate of 180 g/10-mim (260°C/5.0-kg). A differential calorimeter was used to measure the heat of fusion of crystal thereof. As a result, the resin was a crystalline resin wherein the heat was 1 cal/g or more. The glass transition temperature was 25°C and the melting point was 235°C. Incompatible resin (crystalline) (B2-3):

The following was used: a noncyclic polyolefin resin PMP (polymethylpentene) (Mitsui Chemicals, Inc.) having a melt flow rate of 100 g/10-mim (260°C/5.0-kg). A differential calorimeter was used to measure the heat of fusion of crystal thereof. As a result, the resin was a crystalline resin wherein the heat was 1 cal/g or more. The glass transition temperature was 25°C and the melting point was 235°C.

About the incompatible resins B1-1 to B1-10 and B2-1 to B2-3, the apparent melt viscosities $\eta 2$ at the melting point Tm of the crystalline resins (A) plus 20°C were measured. The results are shown in Table 3.

Copolymerized resin (C):

A CHDM (cyclohexanedimethanol) copolymerized PET "PETG 6763" (manufactured by Eastman Chemical Co.) was used. The PET was a PET wherein the copolymerizable glycol component was copolymerized with 33% by mole of cyclohexanedimethanol. A differential calorimeter was used to measure the heat of fusion of crystal thereof. As a result, the resin was a non-crystalline polyester resin (C) wherein the heat was less than 1 cal/g.

Dispersing agent (D):

A PBT/PAG (polyalkylene glycol) copolymer "HYTREL 7247" (manufactured by Du Pont-Toray Co. , Ltd.) was used. The resin was a block copolymer of PBT (polybutylene terephthalate) and PAG (mainly, polytetramethylene glycol). A differential calorimeter was used to measure the heat of fusion of crystal thereof. As a result, the resin was a crystalline resin wherein the heat was 1 cal/g or more.

Examples 1-1, 1-2, 1-12, 1-16, 1-18, 1-19 and 1-25

Some mixtures of raw materials shown in one of Tables 5 were each vacuum-dried at a temperature of 180°C for 3 hours, and then supplied into an extruder to melt-extrude the mixture at a temperature of 280°C. Thereafter, the mixture was filtrated through a 30-μm cut filter, and then introduced into a T die mouthpiece.

Next, the mixture was extruded from the T die mouthpiece into a sheet form. In this way, a melted monolayered sheet was formed. The melted monolayered sheet was caused to adhere closely onto a drum the surface temperature of which was kept at 25°C by a static electricity applying method, and then cooled to be solidified. In this way, a non-stretched monolayered film was yielded. Subsequently, the non-stretched monolayered film was pre-heated on a group of rolls heated to a temperature of 85°C, and then a heating roll of 90°C was used to stretch the film 3.3 times into the longitudinal direction (machine direction). The film was then cooled on a group of rolls of 25°C to yield a monoaxially stretched film.

While both ends of the resultant monoaxially stretched film were grasped with clips, the film was introduced into a pre-heating zone of 95°C in a tenter. Subsequently, the film was continuously stretched 3.2 times in a heating zone of 105°C in a direction perpendicular to the longitudinal direction (in the width direction) . Furthermore, the film was then subjected to thermal treatment at a predetermined temperature (see one of Tables 5) in a thermal treatment zone in the tenter for 20 seconds. Furthermore, the film was subjected to treatment for 4% relaxation in the width direction at a temperature of 180°C followed by treatment for 1% relaxation in the width direction at a temperature of 140°C. Next, the film was evenly and slowly cooled, and wound up to yield each monolayered white film having a thickness of 188 μm. Each of the present examples was good in stretchability and film-formability. The film-formability was better, in particular, in the case where the crystalline resin (A-1) was used. Cross sections of each of the white films were observed; as a result, the film contained therein a large number of fine voids grown from the resin particles as nuclei. The number-average particle size Dn of the resin particles in the film, the number (per $\mu m^2$) of the resin particles, the proportion of particles having a particle diameter of 2 μm or more out of the particles, and the volume-average particle size Dv are

shown in one of Tables 5. Various properties of the films are shown in one of Tables 5. In such a way, the white films of the invention were excellent in whiteness, reflectivity and lightweightness, and were each good in thermal dimensional stability. The dimensional stability was better, in particular, in the case where the crystalline resin (A-2) was used. The resultant white films were each integrated into a backlight, and the brightness thereof was evaluated; as a result, it was understood that the film exhibited a high brightness.

Examples 1-3, 1-4, 1-7, 1-13, 1-17, 1-20, and 1-21

Some mixtures of raw materials shown in one of Tables 5 were each used to yield a white film in the same way as in Example 1-1 except that the heatset temperature was set to a temperature shown in Table 4. Each of the present examples was good in stretchability and film-formability. In particular, in the case where the crystalline resin (A-1) was used, the film-formability was better. Cross sections of each of the white films were observed; as a result, the film contained therein a large number of fine voids grown from the resin particles as nuclei. The number-average particle size Dn of the resin particles in the film, the number (per $\mu m^2$) of the resin particles, the proportion of particles having a particle diameter of 2 $\mu$m or more out of the particles, and the volume-average particle size Dv are shown in one of Tables 5. Various properties of the films are shown in one of Tables 5. These white films were excellent in whiteness, reflectivity and lightweightness although the films were not as high therein as Example 1-1. The films were each good in thermal dimensional stability. In particular, in the case where the crystalline resin (A-2) was used, the thermal dimensional stability was good. The resultant white films were each integrated into a backlight, and the brightness thereof was evaluated; as a result, it was understood that the film exhibited a high brightness although the brightness was not as high as that of Example 1-1.

Examples 1-8 and 1-10

Some mixtures of raw materials shown in one of Tables 5 were each used to yield a white film in the same way as in Example 1-1 except that the heatset temperature was set to a temperature shown in one of Tables 5. Each of the present examples was slightly poorer in stretchability than Example 1-1. However, the examples were each good in film-formability. Cross sections of each of the white films were observed; as a result, the film contained therein a large number of fine voids grown from the resin particles as nuclei. The number-average particle size Dn of the resin particles in the film, the number (per $\mu m^2$) of the resin particles, the proportion of particles having a particle diameter of 2 $\mu$m or more out of the particles, and the volume-average particle size Dv are shown in one of Tables 5. Various properties of the films are shown in one of Tables 5. These white films were excellent in whiteness, reflectivity and lightweightness. The resultant white films were each integrated into a backlight, and the brightness thereof was evaluated; as a result, it was understood that the film exhibited a high brightness. However, the thermal dimensional stability was somewhat poorer than that of Example 1-1.

Examples 1-9 and 1-11

Some mixtures of raw materials shown in one of Tables 5 were each used to yield a white film in the same way as in Example 1-1 except that the heatset temperature was set to a temperature shown in one of Tables 5. Each of the present examples was slightly poorer in stretchability than Example 1-1. However, the examples were each good in film-formability. Cross sections of each of the white films were observed; as a result, the film contained therein a large number of fine voids grown from the resin particles as nuclei, and the resin particles were somewhat oblate. The number-average particle size Dn of the resin particles in the film, the number (per $\mu m^2$) of the resin particles, the proportion of particles having a particle diameter of 2 $\mu$m or more out of the particles, and the volume-average particle size Dv are shown in one of Tables 5. Various properties of the films are shown in one of Tables 5. These white films were excellent in whiteness, reflectivity and lightweightness although the films were poorer therein than Examples 1-3, 1-4, 1-7, 1-13, 1-17, 1-20 and 1-21. The films were good in thermal dimensional stability. The resultant white films were each integrated into a backlight, and the brightness thereof was evaluated; as a result, it was understood that the film exhibited a high brightness although the brightness was poorer than that of Examples 1-3, 1-4, 1-7, 1-13, 1-17, 1-20 and 1-21.

Examples 1-5, 1-6, 1-14, 1-15, and 1-22

White films were each yielded in the same way as in Example 1-1 except that a mixture of raw materials shown in one of Tables 5 was used. Each of the present examples was good in stretchability and film-formability. In particular, in the case where the crystalline resin (A-1) was used, the film-formability was better. Cross sections of each of the white films were observed; as a result, the film contained therein a large number of fine voids grown from the resin particles as nuclei. The number-average particle size Dn of the resin particles in the film, the number (per $\mu m^2$) of the resin

particles, the proportion of particles having a particle diameter of 2 μm or more out of the particles, and the volume-average particle size Dv are shown in one of Tables 5. Various properties of the films are shown in one of Tables 5. These white films were excellent in whiteness, reflectivity and lightweightness although the films were poorer therein than Examples 1-3, 1-4, 1-7, 1-13, 1-17, 1-20 and 1-21. The films were each good in thermal dimensional stability. In particular, in the case where the crystalline resin (A-2) was used, the thermal dimensional stability was better. The resultant white films were each integrated into a backlight, and the brightness thereof was evaluated; as a result, it was understood that the film exhibited a high brightness although the brightness was poorer than that of Examples 1-3, 1-4, 1-7, 1-13, 1-17, 1-20 and 1-21.

Examples 1-23 and 1-24

White films were each yielded in the same way as in Example 1-1 except that the film thickness thereof was set to a film thickness shown in one of Tables 5. The present examples were each good in stretchability and film-formability. Cross sections of each of the white films were observed; as a result, the film contained therein a large number of fine voids grown from the resin particles as nuclei. The number-average particle size Dn of the resin particles in the film, the number (per $\mu m^2$) of the resin particles, the proportion of particles having a particle diameter of 2 μm or more out of the particles, and the volume-average particle size Dv are shown in one of Tables 5. Various properties of the films are shown in one of Tables 5. As shown herein, the white films of the invention were excellent in whiteness, reflectivity and lightweightness. The thermal dimensional stability was good in each of the films. The resultant white films were each integrated into a backlight, and the brightness thereof was evaluated; as a result, it was understood that the film exhibited a higher brightness than Example 1-1.

Example 1-26

A white film was yielded in the same way as in Example 1-1 except that a mixture of raw materials in shown in one of Tables 5 was used. The present example was good in stretchability and film-formability. Cross sections of this white film were observed; as a result, the film contained therein a large number of fine voids grown from the resin particles as nuclei. The number-average particle size Dn of the resin particles in the film, the number (per $\mu m^2$) of the resin particles, the proportion of particles having a particle diameter of 2 μm or more out of the particles, and the volume-average particle size Dv are shown in one of Tables 5. Various properties of the film are shown in one of Tables 5. The white film was excellent in whiteness, reflectivity and lightweightness. The resultant white film was integrated into a backlight, and the brightness thereof was evaluated; as a result, it was understood that the film exhibited a high brightness although the brightness was not as high as that of Example 1-1. However, the thermal dimensional stability was somewhat poorer than that of Example 1-1.

Example 1-27

A white film was yielded in the same way as in Example 1-1 except that a mixture of raw materials in shown in one of Tables 5 was used. The present example was good in stretchability and film-formability. Cross sections of this I white film were observed; as a result, the film contained therein a large number of fine voids grown from the resin particles as nuclei. The number-average particle size Dn of the resin particles in the film, the number (per $\mu m^2$) of the resin particles, the proportion of particles having a particle diameter of 2 μm or more out of the particles, and the volume-average particle size Dv are shown in one of Tables 5. Various properties of the film are shown in one of Tables 5. The white film was excellent in whiteness, reflectivity and lightweightness although the film was not as high therein as Examples 1-3, 1-4, 1-7, 1-13, 1-17, 1-20 and 1-21. The resultant white film was integrated into a backlight, and the brightness thereof was evaluated; as a result, it was understood that the film exhibited a high brightness although the brightness was not as high as that of Examples 1-3, 1-4, 1-7, 1-13, 1-17, 1-20 and 1-21. However, the thermal dimensional stability was somewhat poorer than that of Example 1-1.

Example 1-28

A white film was yielded in the same way as in Example 1-1 except that a mixture of raw materials in shown in one of Tables 5 was used. The present example was good in stretchability. However, when the film was formed, tears were frequently caused. Thus, the example was poorer in film-formability than the other examples. Cross sections of this white film were observed; as a result, the film contained therein a large number of fine voids grown from the resin particles as nuclei. The number-average particle size Dn of the resin particles in the film, the number (per $\mu m^2$) of the resin particles, the proportion of particles having a particle diameter of 2 μm or more out of the particles, and the volume-average particle size Dv are shown in one of Tables 5. Various properties of the film are shown in one of Tables 5. The

white film was excellent in whiteness, reflectivity and lightweightness although the film was not as high therein as Examples 1-3, 1-4, 1-7, 1-13, 1-17, 1-2.0 and 1-21. The thermal dimensional stability was good. The resultant white film was integrated into a backlight, and the brightness thereof was evaluated; as a result, it was understood that the film exhibited a high brightness although the brightness was not as high as that of Examples 1-3, 1-4, 1-7, 1-13, 1-17, 1-20 and 1-21.

Examples 2-1 and 2-2

Some mixtures of raw materials shown in one of Tables 5 were each used to yield a white film in the same way as in Example 1-1 except that the heatset temperature was set to a temperature shown in one of Tables 5. Each of the present examples was good in stretchability, and was good in film-formability although the film-formability was poorer than that of Examples 1-1 to 1-25. Cross sections of each of the white films were observed; as a result, the film contained therein a large number of fine voids grown from the resin particles as nuclei, but the resin particles were somewhat oblate. The number-average particle size Dn of the resin particles in the film, the number (per $\mu m^2$) of the resin particles, the proportion of particles having a particle diameter of 2 $\mu$m or more out of the particles, and the volume-average particle size Dv are shown in one of Tables 5. Various properties of the films are shown in one of Tables 5. These white films were excellent in whiteness, reflectivity and lightweightness although the films were poorer therein than Examples 1-3, 1-4, 1-7, 1-13, 1-17, 1-20 and 1-21. The films were good in thermal dimensional stability. The resultant white films were each integrated into a backlight, and the brightness thereof was evaluated; as a result, it was understood that the film exhibited a high brightness although the brightness was poorer than that of Examples 1-3, 1-4, 1-7, 1-13, 1-17, 1-20 and 1-21.

Examples 2-3 and 2-4

White films were each yielded in the same way as in Example 1-1 except that the film thickness thereof was set to a film thickness shown in one of Tables 5. Each of the present examples was good in stretchability, and was good in film-formability although the film-formability was poorer than that of Examples 1-1 to 1-25. Cross sections of each of the white film were observed; as a result, the film contained therein a large number of fine voids grown from the resin particles as nuclei. The number-average particle size Dn of the resin particles in the film, the number (per $\mu m^2$) of the resin particles, the proportion of particles having a particle diameter of 2 $\mu$m or more out of the particles, and the volume-average particle size Dv are shown in one of Tables 5. Various properties of the films are shown in one of Tables 5. These white films were excellent in whiteness, reflectivity, lightweightness, and the thermal dimensional stability. The resultant white films were each integrated into a backlight, and the brightness thereof was evaluated; as a result, it was understood that the film exhibited a higher brightness than Examples 2-1 and 2-2.

Examples 3-1 and 3-7

In a composite-film-forming apparatus having a main extruder and an auxiliary extruder, some mixtures of main-layer (A layer) raw materials shown in one of Tables 6 were each vacuum-dried at a temperature of 170°C for 5 hours, and then supplied into the main extruder to melt-extrude the mixture at a temperature of 280°C. Thereafter, the mixture was filtrated through a 30-$\mu$m cut filter, and then introduced into a T die composite-mouthpiece.

Separately, about the auxiliary extruder, some mixtures of sub-layer (B) raw materials shown in one of Tables 6 were each vacuum-dried at a temperature of 170°C for 5 hours, and then supplied into the auxiliary extruder to melt-extrude the mixture at a temperature of 280°C. Thereafter, the mixture was filtrated through a 30-$\mu$m cut filter, and then introduced into the T die composite-mouthpiece.

Next, in the T die composite mouthpiece, the introduced mixtures were jointed with each other to laminate a resin layers (B) extruded out from the auxiliary extruder onto both surfaces of a resin layer (A) extruded out from the main extruder (B/A/B) . Thereafter, the jointed mixtures were co-extruded into a sheet form. In this way, a melted laminate sheet was formed. The melted laminate sheet was caused to adhere closely onto a drum the surface temperature of which was kept at 25°C by a static electricity applying method and cooled to be solidified. In this way, a non-stretched laminate film was yielded. Subsequently, in a usual way, the non-stretched laminate film was pre-heated on a group of rolls heated to a temperature of 85°C, and then a heating roll of 90°C was used to stretch the film 3.3 times into the longitudinal direction (machine direction). The film was then cooled on a group of rolls of 25°C to yield a monoaxially stretched film.

While both ends of the resultant monoaxially stretched film were grasped with clips, the film was introduced into a pre-heating zone of 95°C in a tenter. Subsequently, the film was continuously stretched 3.2 times in a heating zone of 105°C in a direction perpendicular to the longitudinal direction (in the width direction). Furthermore, the film was then subjected to thermal treatment at a predetermined temperature (see one of the tables) in a thermal treatment zone

in the tenter for 20 seconds. Furthermore, the film was subjected to treatment for 4% relaxation in the width direction at a temperature of 180°C followed by treatment for 1% relaxation in the width direction at a temperature of 140°C. Next, the film was evenly and slowly cooled, and wound up to set the ratio by thickness between the A layer and the B layers as follows: the B layer/the A layer/the B layer = 1/20/1. In this way, each laminate white film 188 μm in total thickness was yielded. Sectional structures of each of the resultant films were checked; as a result, it was verified that its A layer contained therein a large number of fine voids grown from the resin particles as nuclei. The number-average particle size Dn of the resin particles in the A layer, the number (per $\mu m^2$) of the resin particles, the proportion of particles having a particle diameter of 2 μm or more out of the particles, and the volume-average particle size Dv are shown in one of Tables 6. Various properties of the films are shown in ones of Tables 6. It was understood that these films were excellent in whiteness, reflectivity and lightweightness and good in thermal dimensional stability, and additionally the films were better in film-formability than ones of the monolayered films (Examples 1-1 and 1-18). The resultant white films were each integrated into a backlight, and the brightness thereof was evaluated; as a result, it was understood that a high brightness was exhibited in the same manner as in Examples 1-1 and 1-18.

Examples 3-2 and 3-8

The same way as in Examples 3-1 and 3-7 was performed except that PET containing 5% by weight of titanium oxide having a number-average particle size of 0.5 μm was used as the raw material of the B layers, so as to yield each laminate white film having a total thickness of 188 μm and having the following ratio by thickness between the A layer and the B layers: the B layer/the A layer/the B layer = 1/20/1. The number-average particle size Dn of the resin particles in the A layer, the number (per $\mu m^2$) of the resin particles, the proportion of particles having a particle diameter of 2 μm or more out of the particles, and the volume-average particle size Dv are shown in one of Tables 6. Sectional structures of each of the resultant films were checked; as a result, it was verified that its A layer contained therein a large number of fine voids grown from the resin particles as nuclei. Various properties of the films are shown in ones of Tables 6. It was understood that these films were excellent in whiteness, reflectivity and lightweightness and good in thermal dimensional stability, and additionally the films were better in concealing property and film-formability than ones of the monolayered films (Examples 1-1 and 1-18). The resultant white films were each integrated into a backlight, and the brightness thereof was evaluated; as a result, it was understood that the film exhibited a high brightness although the brightness was poorer than that of Examples 1-1 and 1-18.

Examples 3-3, 3-4, 3-9 and 3-10

The same way as in Examples 3-1 and 3-7 was performed except that PET containing 10% by weight of calcium carbonate having a number-average particle size of 0.5 μm or PET containing 10% by weight of barium sulfate having a number-average particle size of 0.5 μm was used as the raw material of the B layers as shown in one of Tables 6, so as to yield each laminate white film having a total thickness of 188 μm and having the following ratio by thickness between the A layer and the B layers: the B layer/the A layer/the B layer = 1/20/1. The number-average particle size Dn of the resin particles in the A layer, the number (per $\mu m^2$) of the resin particles, the proportion of particles having a particle diameter of 2 μm or more out of the particles, and the volume-average particle size Dv are shown in one of Tables 6. Sectional structures of each of the resultant films were checked; as a result, it was verified that its A layer contained therein a large number of fine voids grown from the resin particles as nuclei. Various properties of the films are shown in ones of Tables 6. It was understood that these films were excellent in whiteness, reflectivity and lightweightness and good in thermal dimensional stability, and additionally the films were better in reflection property and film-formability than ones of the monolayered films (Examples 1-1 and 1-18). The resultant white films were each integrated into a backlight, and the brightness thereof was evaluated; as a result, it was understood that the film exhibited a higher brightness than Examples 1-1 and 1-18.

Examples 3-5, 3-6, 3-11 and 3-12

The same way as in Examples 3-1 and 3-7 was performed except that the film thickness was rendered a film thickness shown in one of Tables 6, so as to yield each laminate white film. Sectional structures of each of the films were checked; as a result, it was verified that the film contained therein a large number of fine voids grown from the resin particles as nuclei. The number-average particle size Dn of the resin particles in the film, the number (per $\mu m^2$) of the resin particles, the proportion of particles having a particle diameter of 2 μm or more out of the particles, and the volume-average particle size Dv are shown in one of Tables 5. Various properties of the films are shown in ones of Tables 6. These films were better in whiteness, reflectivity and lightweightness than Examples 3-1 and 3-7, and were good in thermal dimensional stability. The resultant white films were each integrated into a backlight, and the brightness thereof was evaluated; as a result, it was understood that the film exhibited a high brightness, which was equal to or

more than that of Examples 3-1 and 3-7.

Example 4-1

The same way as in Examples 3-1 and 3-7 was performed except that raw materials shown in ones of Tables 6 were used, so as to yield a white film having a total thickness of 188 μm and having the following ratio by thickness between the A layer and the B layers: the B layer/the A layer/the B layer = 1/20/1. The number-average particle size Dn of the resin particles in the A layer, the number (per $\mu m^2$) of the resin particles, the proportion of particles having a particle diameter of 2 μm or more out of the particles, and the volume-average particle size Dv are shown in one of Tables 6. Sectional structures of the resultant film were checked; as a result, it was verified that its A layer contained therein a large number of fine voids grown from the resin particles as nuclei. This film was excellent in whiteness, reflectivity and lightweightness although this film was poorer therein than Examples 3-1 and 3-7. The film was better in thermal dimensional stability than Example 3-1. It was understood that the film was better in film-formability than one of the monolayered films (Example 2-1). The resultant white film was integrated into a backlight, and the brightness thereof was evaluated; as a result, it was understood that the film exhibited a high brightness although the brightness was poorer than that of Examples 3-1 and 3-7.

Example 4-2

The same way as in Example 4-1 was performed except that PET containing 5% by weight of titanium oxide having a number-average particle size of 0.5 μm was used as the raw material of the B layers, so as to yield a laminate white film having a total thickness of 188 μm and having the following ratio by thickness between the A layer and the B layers : the B layer/the A layer/the B layer = 1/20/1. The number-average particle size Dn of the resin particles in the A layer, the number (per $\mu m^2$) of the resin particles, the proportion of particles having a particle diameter of 2 μm or more out of the particles, and the volume-average particle size Dv are shown in one of Tables 6. Sectional structures of the resultant film were checked; as a result, it was verified that its A layer contained therein a large number of fine voids grown from the resin particles as nuclei. Various properties of the film are shown in ones of Tables 6. It was understood that this film was excellent in whiteness, reflectivity, lightweightness and thermal dimensional stability, and additionally the film was better in concealing property than one of the monolayered films (Example 2-1). The resultant white film was integrated into a backlight, and the brightness thereof was evaluated; as a result, it was understood that the film exhibited a high brightness although the brightness was poorer than that of Example 4-1.

Examples 4-3 and 4-4

The same way as in Example 4-1 was performed except that PET containing 10% by weight of calcium carbonate having a number-average particle size of 0.5 μm or PET containing 10% by weight of barium sulfate having a number-average particle size of 0.5 μm was used as the raw material of the B layers as shown in one of Tables 6, so as to yield each laminate white film having a total thickness of 188 μm and having the following ratio by thickness between the A layer and the B layers: the B layer/the A layer/the B layer = 1/20/1. The number-average particle size Dn of the resin particles in the A layer, the number (per $\mu m^2$) of the resin particles, the proportion of particles having a particle diameter of 2 μm or more out of the particles, and the volume-average particle size Dv are shown in one of Tables 6. Sectional structures of each of the resultant films were checked; as a result, it was verified that its A layer contained therein a large number of fine voids grown from the resin particles as nuclei. Various properties of the films are shown in ones of Tables 6. These films were better in whiteness, reflectivity and lightweightness than Example 4-1, and were excellent in thermal dimensional stability. The resultant white films were each integrated into a backlight, and the brightness thereof was evaluated; as a result, it was understood that the film exhibited a higher brightness than Example 4-1.

Examples 4-5 and 4-6

The same way as in Example 4-1 was performed except that the film thickness was rendered a film thickness shown in one of Tables 6, so as to yield each laminate white film. Sectional structures of the film were checked; as a result, it was verified that the film contained therein a large number of fine voids grown from the resin particles as nuclei. The number-average particle size Dn of the resin particles in the film, the number (per $\mu m^2$) of the resin particles, the proportion of particles having a particle diameter of 2 μm or more out of the particles, and the volume-average particle size Dv are shown in one of Tables 5. Various properties of the films are shown in ones of Tables 5. These films were better in whiteness, reflectivity and lightweightness than Example 4-1, and were excellent in thermal dimensional stability. The resultant white films were each integrated into a backlight, and the brightness thereof was evaluated; as a result, it was understood that the film exhibited a high brightness, which was equal to or more than that of Example 4-1.

Example 6-1

A white film was yielded in the same way as in Example 1-1 except the following: a crystalline resin (A), a copolymerized resin (C) and a dispersing agent (D) shown in one of Tables 8 were mixed and pulverized; next, into these components was incorporated silicone resin particles XC99-A8808 (manufactured by Momentive Performance Material Inc.) having a number-average particle size of 0.7 μm, as an incompatible resin (B); the mixture was vacuum-dried at a temperature of 180°C for 3 hours, and then supplied into a biaxial extruder; the mixture was melt-extruded at a temperature of 280°C, and then filtrated through a 30-μm cut filter; and thereafter, the mixture was introduced into the T die mouthpiece. The film was good in stretchability and film-formability. Cross sections of this white film were observed; as a result, the film contained therein a large number of fine voids grown from the resin particles as nuclei. The number-average particle size Dn of the resin particles in the film, the number (per $\mu m^2$) of the resin particles, the proportion of particles having a particle diameter of 2 μm or more out of the particles, and the volume-average particle size Dv are shown in one of Tables 8. Various properties of the film are shown in ones of Tables 5. The film was excellent in whiteness, reflectivity and lightweightness, and was good in thermal dimensional stability. The resultant white film was integrated into a backlight, and the brightness thereof was evaluated; as a result, it was understood that the film exhibited a high brightness.

Comparative Examples 1-1 to 1-6, and 2-1 to 2-4

Raw materials shown in one of Table 5 were used to form each film in the same way as in Example 1-1 except that the heatset temperature was set to a heatset temperature shown in one of Tables 5. In this way, each monolayered film having a thickness of 188 μm was yielded. Cross sections of the white film were observed; as a result, the film contained therein a large number of fine voids grown from the resin particles as nuclei. Results of the number-average particle size Dn of the resin particles, the number (per $\mu m^2$) of the resin particles, the proportion of particles having a particle diameter of 2 μm or more out of the particles, and the volume-average particle size Dv are shown in one of Tables 5; however, it was understood that the results were poorer than those of Examples. Various properties of each of the films are shown in ones of Tables 5, and the film was poor in concealing property and reflectivity. The resultant white films were each integrated into a backlight, and the brightness thereof was evaluated; as a result, it was understood that the film was largely poorer in brightness than Example 1-1.

Comparative Example 5-1

A film was formed in the same way as in Example 1-1 except that chips were used which were formed by mixing, in a biaxial kneader, 65 parts by weight of polyethylene terephthalate pellets (PET) having an intrinsic viscosity of 0.63 dL/g and a carboxyl terminal group amount of 40 equivalents/ton, 20 parts by weight of PET copolymerized with 17. 5% by mole of isophthalic acid, and 15% by weight of barium sulfate having a number-average particle size Dn of 0.8 μm. In this way, a monolayered film having a thickness of 188 μm was able to be yielded. However, during the production of the film, tears were frequently caused. Thus, the present comparative example was poorer in film-formability than Example 1-1. Cross sections of this white film were observed; as a result, the film contained therein a large number of fine voids grown from the inorganic particles as nuclei. Results of the number-average particle size Dn of the inorganic particles, the number (per $\mu m^2$) of the inorganic particles, the proportion of particles having a particle diameter of 2 μm or more out of the particles, and the volume-average particle size Dv are shown in one of Tables 7. Various properties of the film are also shown in ones of Tables 7. However, the present comparative example was poor in reflectivity. The resultant white film was integrated into a backlight, and the brightness thereof was evaluated; as a result, it was understood that the film was largely poorer in brightness than Example 1-1.

Comparative Example 5-2

A film was attempted to be formed in the same way as in Example 1-1 except that chips were used which were formed by mixing, in a biaxial kneader, 60 parts by weight of polyethylene terephthalate pellets (PET) having an intrinsic viscosity of 0.63 dL/g and a carboxyl terminal group amount of 40 equivalents/ton, 20 parts by weight of PET copolymerized with 17.5% by mole of isophthalic acid, and 20% by weight of barium sulfate having a number-average particle size of 0.8 μm. However, tears were frequently caused. Thus, no white film was able to be yielded.

Comparative Examples 3-1 to 3-4, 3-5 and 3-8, and 4-1 and 4-4

Raw materials shown in one of Tables 6 were used to form a film in the same way as in Examples 3-1 to 3-4, thereby yielding each monolayered film having a thickness of 188 μm. Crosse sections of each of the white films were

observed; as a result, the film contained therein a large number of fine voids grown from the resin particles as nuclei. Results of the number-average particle size Dn of the resin particles, the number (per $\mu m^2$) of the resin particles, the proportion of particles having a particle diameter of 2 $\mu$m or more out of the particles, and the volume-average particle size Dv are shown in one of Tables 5; however, it was understood that the present comparative examples were each poorer than Examples 3-1 to 3-4. Various properties of each of the films are shown in ones of Tables 6. The film was poor in concealing property and reflectivity. The resultant white films were each integrated into a backlight, and the brightness thereof was evaluated; as a result, it was understood that the film was largely poorer in brightness than Examples 3-1 to 3-4.

Comparative Examples 5-3 to 5-6

Raw materials shown in one of Tables 7 were used to form a film in the same way as in Examples 3-1 to 3-4, thereby making it possible to yield each monolayered film having a thickness of 188 $\mu$m. However, during the production of the film, tears were frequently caused. Thus, the present comparative examples were poorer in film-formability than Examples 3-1 to 3-4. Cross sections of each of the white films were observed; as a result, the film contained therein a large number of fine voids grown from the inorganic particles as nuclei. Results of the number-average particle size Dn of the inorganic particles in the film, the number (per $\mu m^2$) of the inorganic particles, the proportion of particles having a particle diameter of 2 $\mu$m or more out of the particles, and the volume-average particle size Dv are shown in one of Tables 7. Various properties of each of the films are also shown in ones of Tables 7. However, the present comparative examples were poor in reflectivity. The resultant white films were each integrated into a backlight, and the brightness thereof was evaluated; as a result, it was understood that the film was largely poorer in brightness than Examples 3-1 to 3-4.

Comparative Example 6-1

A white film was yielded in the same way as in Example 6-1 except that raw materials (silicone resin particles "TOSPEARL" 120 (manufactured by Momentive Performance Material Inc.) having a number-average particle size of 2.0 $\mu$m as an incompatible resin (B)) shown in one of Tables 8 were used. The comparative example was good in stretchability and film-formability. Cross sections of this white film were observed; as a result, the film contained therein a large number of fine voids grown from the resin particles as nuclei. The number-average particle size Dn of the resin particles in the film, the number (per $\mu m^2$) of the inorganic particles, the proportion of particles having a particle diameter of 2 $\mu$m or more out of the particles, and the volume-average particle size Dv are shown in one of Tables 8. Various properties of the film are also shown in ones of Tables 8. However, the comparative example was poor in reflectivity. The resultant white film was integrated into a backlight, and the brightness thereof was evaluated; as a result, it was understood that the film was largely poorer in brightness than Example 6-1.

Table 1

| Kind | Norbornene component amount (% by weight) | Ethylene component amount (% by weight) | Glass transition temperature (°C) |
|---|---|---|---|
| TOPAS6013 | 77 | 23 | 140 |
| TOPAS6015 | 80 | 20 | 160 |
| TOPAS6017 | 82 | 18 | 180 |
| TOPAS6018 | 84 | 16 | 190 |

Table 2

| Crystalline resin (A) | Melting point Tm | Melt viscosity $\eta$1 (Pa·s) at Tm+20°C |
|---|---|---|
| A-1 | 250 | 440 |
| A-2 | 250 | 260 |
| A-3 | 250 | 600 |

(continued)

| Crystalline resin (A) | Melting point Tm | Melt viscosity η1 (Pa·s) at Tm+20°C |
|---|---|---|
| A-4 | 250 | 1000 |
| A-5 | 250 | 40 |

Table 3

| Incompatible resin (B) | Glass transition temperature Tg | MVR (ml/10mim) | Melt viscosity η2 (Pa·s) at Tm+20°C |
|---|---|---|---|
| B1-1 | 140 | 14 | 410 |
| B1-2 | 160 | 4 | 480 |
| B1-3 | 180 | 1.5 | 1650 |
| B1-4 | 180 | 4.5 | 770 |
| B1-5 | 190 | 1.5 | 1650 |
| B1-6 | 190 | 2 | 1070 |
| B1-7 | 190 | 3 | 900 |
| B1-8 | 190 | 4.5 | 770 |
| B1-9 | 190 | 7 | 610 |
| B1-10 | 190 | 10 | 430 |
| B1-11 | 190 | 20 | 320 |
| B1-12 | 190 | 15 | 380 |
| B1-13 | 190 | 80 | 115 |

Table 4

| Incompatible resin (B) | Melting point Tm (°C) | MFR (g/10mim) | Melt viscosity η1 (Pa·s) at Tm+20°C |
|---|---|---|---|
| B2-1 | 235 | 8 | 1600 |
| B2-2 | 235 | 180 | 120 |
| B2-3 | 235 | 100 | 520 |

Table 5-1

| | Crystalline resin (A) | | Incompatible resin (B) | | Copolymerized resin (C) | Dispersing agent (D) |
|---|---|---|---|---|---|---|
| | Kind | Content by percentage (% by weight) | Kind | Content by percentage (% by weight) | Content by percentage (% by weight) | Content by percentage (% by weight) |
| Example | | | | | | |
| 1-1 | A-1 | 49 | B1-8 | 2b | 20 | 6 |

(continued)

| | Crystalline resin (A) | | Incompatible resin (B) | | Copolymerized resin (C) | Dispersing agent (D) |
|---|---|---|---|---|---|---|
| | Kind | Content by percentage (% by weight) | Kind | Content by percentage (% by weight) | Content by percentage (% by weight) | Content by percentage (% by weight) |
| Example | | | | | | |
| 1-2 | A-1 | 49 | B1-9 | 25 | 20 | 6 |
| 1-3 | A-1 | 49 | B1-7 | 25 | 20 | 6 |
| 1-4 | A-1 | 49 | B1-10 | 25 | 20 | 6 |
| 1-5 | A-1 | 49 | B1-11 | 25 | 20 | 6 |
| 1-6 | A-1 | 49 | B1-6 | 25 | 20 | 6 |
| 1-7 | A-1 | 49 | B1-4 | 25 | 20 . | 6 |
| 1-8 | A-1 | 49 | B1-2 | 25 | 20 | 6 |
| 1-9 | A-1 | 49 | B1-2 | 25 | 20 | 6 |
| 1-10 | A-1 | 49 | B1-1 | 25 | 20 | 6 |
| 1-11 | A-1 | 49 | B1-1 | 25 | 20 | 6 |
| 1-12 | A-1 | 54 | B1-8 | 20 | 20 | 6 |
| 1-13 | A-1 | 61 | B1-8 | 15 | 20 | 4 |
| 1-14 | A-1 | 67 | B1-8 | 10 | 20 | 3 |
| 1-15 | A-1 | 55 | B1-8 | 25 | 20 | 0 |
| 1-16 | A-1 | 59 | B1-8 | 25 | 10 | 6 |
| 1-17 | A-1 | 69 | B1-8 | 25 | 0 | 6 |
| 1-18 | A-2 | 49 | B1-9 | 25 | 20 | 6 |
| 1-19 | A-2 | 49 | B1-10 | 25 | 20 | 6 |
| 1-20 | A-2 | 49 | B1-8 | 25 | 20 | 6 |
| 1-21 | A-2 | 49 | B1-11 | 25 | 20 | 6 |
| 1-22 | A-2 | 49 | B1-7 | 25 | 20 | 6 |
| 1-23 | A-1 | 49 | B1-8 | 25 | 20 | 6 |
| 1-24 | A-1 | 49 | B1-8 | 25 | 20 | 6 |
| 1-25 | A-2 | 49 | B1-10 | 25 | 20 | 6 |
| 1-26 | A-3 | 49 | B1-5 | 25 | 20 | 6 |
| 1-27 | A-4 | 49 | B1-9 | 25 | 20 | 6 |
| 1-28 | A-5 | 49 | B-13 | 25 | 20 | 6 |
| 2-1 | A-2 | 74 | B2-3 | 20 | 0 | 6 |
| 2-2 | A-1 | 74 | B2-3 | 20 | 0 | 6 |
| 2-3 | A-2 | 74 | B2-3 | 20 | 0 | 6 |
| 2-4 | A-2 | 74 | B2-3 | 20 | 0 | 6 |
| Comparative Example | | | | | | |
| 1-1 | A-1 | 49 | B1-5 | 25 | 20 | 6 |

(continued)

| Comparative Example | | | | | | |
|---|---|---|---|---|---|---|
| 1-2 | A-1 | 49 | B1-3 | 25 | 20 | 6 |
| 1-3 | A-2 | 49 | B1-5 | 25 | 20 | 6 |
| 1-4 | A-2 | 49 | B1-3 | 25 | 20 | 6 |
| 1-5 | A-2 | 49 | B1-6 | 25 | 20 | 6 |
| 1-6 | A-1 | 67 | B1-8 | 5 | 20 | 3 |
| 2-1 | A-1 | 74 | B2-1 | 20 | 0 | 6 |
| 2-2 | A-1 | 74 | B2-2 | 20 | 0 | 6 |
| 2-3 | A-2 | 74 | B2-1 | 20 | 0 | 6 |
| 2-4 | A-2 | 74 | B2-2 | 20 | 0 | 6 |

Table 5-2

| | η1 (Pa·s) | η2 (Pa·s) | log 10 (η2/η1) | log10 (η2)/ log10 (η1) | η2-η1 (Pa·s) | Tg1 (°C) | Tm2 (°C) |
|---|---|---|---|---|---|---|---|
| Example | | | | | | | |
| 1-1 | 440 | 770 | 0.24 | 1.09 | 330 | 190 | - |
| 1-2 | 440 | 610 | 0.14 | 1.05 | 170 | 190 | - |
| 1-3 | 440 | 900 | 0.31 | 1.12 | 460 | 190 | - |
| 1-4 | 440 | 430 | -0.01 | 1.00 | -10 | 190 | - |
| 1-5 | 440 | 320 | -0.14 | 0.95 | -120 | 190 | - |
| 1-6 | 440 | 1070 | 0.39 | 1.15 | 630 | 190 | - |
| 1-7 | 440 | 770 | 0.24 | 1.09 | 330 | 180 | - |
| 1-8 | 440 | 780 | 0.25 | 1.09 | 340 | 160 | - |
| 1-9 | 440 | 780 | 0.25 | 1.09 | 340 | 160 | - |
| 1-10 | 440 | 410 | -0.03 | 0.99 | -30 | 140 | - |
| 1-11 | 440 | 410 | -0.03 | 0.99 | -30 | 140 | - |
| 1-12 | 440 | 770 | 0.24 | 1.09 | 330 | 190 | - |
| 1-13 | 440 | 770 | 0.24 | 1.09 | 330 | 190 | - |
| 1-14 | 440 | 770 | 0.24 | 1.09 | 330 | 190 | - |
| 1-15 | 440 | 770 | 0.24 | 1.09 | 330 | 190 | - |
| 1-16 | 440 | 770 | 0.24 | 1.09 | 330 | 190 | - |
| 1-17 | 440 | 770 | 0.24 | 1.09 | 330 | 190 | - |
| 1-18 | 260 | 610 | 0.37 | 1.15 | 350 | 190 | - |
| 1-19 | 260 | 430 | 0.22 | 1.09 | 170 | 190 | - |
| 1-20 | 260 | 770 | 0.47 | 1.20 | 510 | 190 | - |
| 1-21 | 260 | 320 | 0.09 | 1.04 | 60 | 190 | - |
| 1-22 | 260 | 900 | 0.54 | 1.22 | 640 | 190 | - |
| 1-23 | 440 | 770 | 0.24 | 1.09 | 330 | 190 | - |

(continued)

| | η1 (Pa·s) | η2 (Pa·s) | log 10 (η2/η1) | log10 (η2)/ log10 (η1) | η2-η1 (Pa·s) | Tg1 (°C) | Tm2 (°C) |
|---|---|---|---|---|---|---|---|
| Example | | | | | | | |
| 1-24 | 440 | 770 | 0.24 | 1.09 | 330 | 190 | - |
| 1-25 | 260 | 380 | 0.16 | 1.07 | 120 | 190 | - |
| 1-26 | 600 | 1650 | 0.44 | 1.16 | 1050 | 190 | - |
| 1-27 | 1000 | 610 | -0.21 | 0.93 | -390 | 190 | - |
| 1-28 | 40 | 115 | 0.46 | 1.29 | 75 | 190 | - |
| 2-1 | 260 | 520 | 0.46 | 1.12 | 260 | - | 235 |
| 2-2 | 450 | 520 | 0.06 | 1.02 | 70 | - | 235 |
| 2-3 | 260 | 520 | 0.30 | 1.12 | 260 | - | 235 |
| 2-4 | 260 | 520 | 0.30 | 1.12 | 260 | - | 235 |
| Comparative Example | | | | | | | |
| 1-1 | 437 | 1650 | 0.58 | 1.22 | 1213 | 190 | - |
| 1-2 | 437 | 1650 | 0.58 | 1.22 | 1213 | 180 | - |
| 1-3 | 260 | 1650 | 0.80 | 1.33 | 1390 | 190 | - |
| 1-4 | 260 | 1650 | 0.80 | 1.33 | 1390 | 180 | - |
| 1-5 | 260 | 1070 | 0.61 | 1.25 | 810 | 190 | - |
| 1-6 | 440 | 770 | 0.24 | 1.09 | 330 | 190 | - |
| 2-1 | 260 | 1600 | 0.79 | 1.33 | 1340 | - | 235 |
| 2-2 | 260 | 120 | -0.34 | 0.86 | -140 | - | 235 |
| 2-3 | 440 | 1600 | 0.56 | 1.21 | 1160 | - | 235 |
| 2-4 | 440 | 120 | -0.56 | 0.79 | -320 | - | 235 |

Table 5-3

| | Heatset temperature (°C) | Stretchability | Film-Structurabilty | Number average particle size Dn (μm) | The number(per $\mu m^3$) of resin particles | Proportion(%) of resin particles having a particle diameter of 2 μm or more | Volume average parctile size Dn (μm) | Dr/Dn | Film thickness (μm) | Specific party | Transmittance (%) | Relative reflectance (%) | Brightness $cm^2$ | Thermo stability |
|---|---|---|---|---|---|---|---|---|---|---|---|---|---|---|
| Example | | | | | | | | | | | | | | |
| 1-1 | 190 | S | S | 0.81 | 0.152 | 0.2 | 1.12 | 1.38 | 188 | 0.58 | 1.90 | 101.2 | 5070 | A |
| 1-2 | 190 | S | S | 0.85 | 0.137 | 0.4 | 1.18 | 1.39 | 188 | 0.58 | 1.90 | 101.2 | 5070 | A |
| 1-3 | 190 | S | S | 0.92 | 0.134 | 0.8 | 1.30 | 1.41 | 188 | 0.60 | 2.10 | 100.7 | 5020 | A |
| 1-4 | 190 | S | S | 1.15 | 0.125 | 2.5 | 1.54 | 1.34 | 188 | 0.61 | 2.20 | 100.6 | 5010 | A |
| 1-5 | 190 | S | S | 1.44 | 0.100 | 1.4 | 1.95 | 1.35 | 188 | 0.60 | 2.40 | 100 | 4980 | A |
| 1-6 | 190 | S | S | 1.02 | 0.100 | 13.0 | 1.44 | 1.41 | 188 | 0.62 | 2.40 | 100 | 4970 | A |
| 1-7 | 190 | S | S | 0.83 | 0.149 | 0.7 | 1.15 | 1.39 | 188 | 0.61 | 2.10 | 100.9 | 5040 | A |
| 1-8 | 160 | A | S | 0.84 | 0.145 | 1.0 | 1.17 | 1.39 | 188 | 0.60 | 2.00 | 101 | 5050 | C |
| 1-9 | 190 | A | S | 0.94 | 0.125 | 1.1 | 1.33 | 1.41 | 188 | 0.75 | 2.50 | 100.2 | 4960 | A |
| 1-10 | 140 | B | S | 0.99 | 0.125 | 5.4 | 1.54 | 1.56 | 188 | 0.60 | 2.10 | 100.8 | 5040 | C |
| 1-11 | 170 | B | S | 0.99 | 0.125 | 5.4 | 1.53 | 1.55 | 188 | 0.80 | 2.50 | 100.2 | 4950 | B |
| 1-12 | 190 | S | S | 0.82 | 0.122 | 0.4 | 1.12 | 1.37 | 188 | 0.59 | 2.00 | 101 | 5050 | A |
| 1-13 | 190 | S | S | 0.81 | 0.110 | 0.2 | 1.10 | 1.36 | 188 | 0.60 | 2.30 ' | 100.5 | 5000 | A |
| 1-14 | 190 | S | S | 0.80 | 0.080 | 0.1 | 1.09 | 1.36 | 188 | 0.61 | 2.50 | 100 | 4070 | A |
| 1-15 | 190 | S | S | 1.18 | 0.100 | 14.0 | 1.86 | 1.58 | 188 | 0.64 | 2.50 | 100 | 4060 | A |
| 1-16 | 190 | S | A | 0.92 | 0.135 | 3.0 | 1.28 | 1.39 | 188 | 0.60 | 2.00 | 101 | 5050 | A |
| 1-17 | 190 | S | B | 1.03 | 0.124 | 8.3 | 1.49 | 1.45 | 188 | 0.62 | 2.20 | 100.6 | 5010 | A |
| 1-18 | 190 | S | A | 0.84 | 0.149 | 0.5 | 1.18 | 1.40 | 188 | 0.58 | 1.90 | 101.2 | 5070 | S |
| 1-19 | 190 | S | A | 0.82 | 0.151 | 0.5 | 1.15 | 1.40 | 188 | 0.61 | 1.90 | 101.2 | 5070 | S |
| 1-20 | 190 | S | A | 0.94 | 0.137 | 5.0 | 1.38 | 1.47 | 188 | 0.58 | 2.10 | 100.7 | 5020 | S |

(continued)

| | Heatset temperature (°C) | Stretchability | Film-Structurabilty | Number average particle size Dn (μm) | The number(per μm$^3$) of resin particles | Proportion(%) of resin particles having a particle diameter of 2 μm or more | Volume average parctile size Dn (μm) | Dr/Dn | Film thickness (μm) | Specific party | Transmittance (%) | Relative reflectance (%) | Brightness cm$^2$ | Thermo stability |
|---|---|---|---|---|---|---|---|---|---|---|---|---|---|---|
| Example | | | | | | | | | | | | | | |
| 1-21 | 190 | S | A | 1.08 | 0.125 | 2.5 | 1.54 | 1.43 | 188 | 0.60 | 2.30 | 100.4 | 5000 | S |
| 1-22 | 190 | S | A | 1.12 | 0.100 | 14.5 | 1.79 | 1.60 | 188 | 0.60 | 2.50 | 100 | 4960 | S |
| 1-23 | 190 | S | S | 0.81 | 0.152 | 0.2 | 1.12 | 1.38 | 250 | 0.58 | 1.40 | 101.5 | 5100 | A |
| 1-24 | 190 | S | S | 0.81 | 0.152 | 0.2 | 1.12 | 1.38 | 300 | 0.58 | 1.20 | 102.1 | 5130 | A |
| 1-25 | 190 | S | A | 0.80 | 0.155 | 0.3 | 1.10 | 1.38 ' | 188 | 0.58 | 1.90 | 101.2 | 5070 | S |
| 1-26 | 190 | S | S | 0.85 | 0.142 | 2.5 | 1.25 | 1.47 | 188 | 0.60 | 2.00 | 101 | 5040 | C |
| 1-27 | 190 | S | S | 1.10 | 0.101 | 14.0 | 1.75 | 1.59 | 188 | 0.60 | 2.50 | 100 | 4960 | C |
| 1-28 | 190 | S | × | 1.12 | 0.100 | 14.9 | 1.91 | 1.71 | 188 | 0.60 | 2.50 | 100 | 4960 | S |

Table 5-4

| | heatset temperature (°C) | Structurabilty | Film formability | Number average particle size Dn (μm) | The number (per $cm^2$) of resin particles | Proportion (%) of resin particles having a particle diameter of 2 μm or more | Volume average particle the Dn (μm) | Dv/Dn | Film thickness (μm) | Specific gravity | Transmittance (%) | Retrieve reflectance (%) | Brightness $cm^2$ | Thermo stability |
|---|---|---|---|---|---|---|---|---|---|---|---|---|---|---|
| Example | | | | | | | | | | | | | | |
| 2-1 | 210 | S | B | 1.32 | 0.069 | 9.5 | 1.86 | 1.41 | 188 | 0.62 | 2.50 | 100.2 | 4960 | S |
| 2-2 | 210 | S | B | 1.34 | 0.067 | 9.8 | 1.90 | 1.42 | 188 | 0.62 | 2.50 | 100.2 | 4960 | S |
| 2-3 | 210 | S | B | 1.32 | 0.069 | 9.5 | 1.86 | 1.41 | 250 | 0.62 | 2.20 | 100.6 | 5010 | S |
| 2-4 | 210 | S | B | 1.32 | 0.069 | 9.5 | 1.86 | 1.41 | 300 | 0.62 | 1.90 | 101.2 | 5070 | S |
| Comparative Example | | | | | | | | | | | | | | |
| 1-1 | 190 | S | S | 1.08 | 0.130 | 15.1 | 1.89 | 1.75 | 188 | 0.64 | 2.60 | 99.8 | 4940 | A |
| 1-2 | 190 | S | S | 1.02 | 0.120 | 15.2 | 2.46 | | 188 | 0.66 | 2.70 | 99.8 | 4940 | A |
| 1-3 | 190 | S | A | 1.75. | 0.110 | 12.5 | 3.00 | 2.41 | 188 | 0.65 | 2.80 | 99.7 | 4930 | A |
| 1-4 | 180 | S | A | 1.80 | 0.100 | 15.4 | 3.10 | 1.72 | 188 | 0.67 | 2.80 | 99.7 | 4930 | A |
| 1-5 | 190 | S | A | 1.02 | 0.140 | 15.1 | 1.58 | 1.55 | 188 | 0.63 | 2.60 | 99.8 | 4940 | A |
| 1-6 | 190 | S | S | 0.80 | 0.040 | 0.1 | 1.08 | 1.35 | 188 | 0.70 | 3.00 | 99.4 | 3990 | A |
| 2-1 | 210 | S | B | 1.36 | 0.052 | 15.3 | 2.24 | 1.65 | 188 | 0.65 | 2.90 | 99.5 | 4920 | A |
| 2-2 | 210 | S | B | 1.31 | 0.065 | 10.8 | 1.90 | 1.45 | 188 | 0.64 | 2.90 | 99.5 | 4920 | A |
| 2-3 | 210 | S | B | 1.32 | 0.055 | 15.1 | 2.20 | 1.67 | 188 | 0.68 | 2.90 | 99.5 | 4920 | A |
| 2-4 | 210 | S | B | 1.31 | 0.065 | 10.8 | 1.90 | 1.45 | 188 | 0.66 | 2.90 | 99.5 | 4920 | A |

Table 6-1

| | Main layer (A layer) composition | | | | | |
|---|---|---|---|---|---|---|
| | Crystalline resin (A) | | Incompatible resin (B) | | Copolymerized resin (C) | Dispersing agent (D) |
| | Kind | Content by percentage (% by weight) | Kind | Content by percentage (% by weight) | Content by percentage (% by weight) | Content by percentage (% by weight) |
| Example | | | | | | |
| 1-1 | A-1 | 47 | B1-8 | 25 | 20 | 6 |
| 3-1 | A-1 | 47 | B1-8 | 25 | 20 | 6 |
| 3-2 | A-1 | 47 | B1-8 | 25 | 20 | 6 |
| 3-3 | A-1 | 47 | B1-8 | 25 | 20 | 6 |
| 3-4 | A-1 | 47 | B1-8 | 25 | 20 | 6 |
| 3-5 | A-1 | 47 | B1-8 | 25 | 20 | 6 |
| 3-6 | A-1 | 47 | B1-8 | 25 | 20 | 6 |
| 1-18 | A-2 | 47 | B1-8 | 25 | 20 | 6 |
| 3-7 | A-2 | 47 | B1-8 | 25 | 20 | 6 |
| 3-8 | A-2 | 47 | B1-8 | 25 | 20 | 6 |
| 3-9 | A-2 | 47 | B1-8 | 25 | 20 | 6 |
| 3-10 | A-2 | 47 | B1-8 | 25 | 20 | 6 |
| 3-11 | A-2 | 47 | B1-8 | 25 | 20 | 6 |
| 3-12 | A-2 | 72 | B1-8 | 25 | 20 | 6 |
| 2-1 | A-2 | 72 | B2-3 | 20 | 0 | 6 |
| 4-1 | A-2 | 72 | B2-3 | 20 | 0 | 6 |
| 4-2 | A-2 | 72 | B2-3 | 20 | 0 | 6 |
| 4-3 | A-2 | 72 | B2-3 | 20 | 0 | 6 |
| 4-4 | A-2 | 72 | B2-3 | 20 | 0 | 6 |
| 4-5 | A-2 | 72 | B2-3 | 20 | 0 | 6 |
| 4-6 | A-2 | 72 | B2-3 | 20 | 0 | 6 |
| Comparative Example | | | | | | |
| 1-1 | A-1 | 47 | B1-5 | 25 | 20 | 6 |
| 3-1 | A-1 | 47 | B1-5 | 25 | 20 | 6 |
| 3-2 | A-1 | 47 | B1-5 | 25 | 20 | 6 |
| 3-3 | A-1 | 47 | B1-5 | 25 | 20 | 6 |
| 3-4 | A-1 | 47 | B1-5 | 25 | 20 | 6 |
| 1-3 | A-2 | 49 | B1-5 | 25 | 20 | 6 |
| 3-5 | A-2 | 49 | B1-5 | 25 | 20 | 6 |
| 3-6 | A-2 | 49 | B1-5 | 25 | 20 | 6 |
| 3-7 | A-2 | 49 | B1-5 | 25 | 20 | 6 |
| 3-8 | A-2 | 49 | B1-5 | 25 | 20 | 6 |

(continued)

| Comparative Example | | | | | | |
|---|---|---|---|---|---|---|
| 2-1 | A-1 | 72 | B2-1 | 25 | 0 | 6 |
| 4-1 | A-1 | 72 | B2-1 | 20 | 0 | 6 |
| 4-2 | A-1 | 72 | B2-1 | 20 | 0 | 6 |
| 4-3 | A-1 | 72 | B2-1 | 20 | 0 | 6 |
| 4-4 | A-1 | 72 | B2-1 | 20 | 0 | 6 |

Table 6-2

| | η1 (Pa·s) | η2 (Pa·s) | log10 (η2/η1) | log10 (η2) /log10(η1) | η2-η1 (Pa·s) | Tg1 (°C) | Tm2 (°C) | Sub-layer (B layer) composition | | |
|---|---|---|---|---|---|---|---|---|---|---|
| | | | | | | | | PET | Inorganic particles | |
| | | | | | | | | Content by percentage (% by weight) | Kind | Content by percentage (% by weight) |
| Example | | | | | | | | | | |
| 1-1 | 440 | 770 | 0.24 | 1.09 | 330 | 190 | - | - | - | - |
| 3-1 | 440 | 770 | 0.24 | 1.09 | 330 | 190 | - | 100 | - | - |
| 3-2 | 440 | 770 | 0.24 | 1.09 | 330 | 190 | - | 98 | Titanium oxide | 5 |
| 3-3 | 440 | 770 | 0.24 | 1.09 | 330 | 190 | - | 90 | Calcium | 10 |
| 3-4 | 440 | 770 | 0.24 | 1.09 | 330 | 190 | - | 90 | barium sulfate | 10 |
| 3-5 | 440 | 770 | 0.24 | 1.09 | 330 | 190 | - | 90 | barium sulfate | 10 |
| 3-6 | 440 | 770 | 0.24 | 1.09 | 330 | 190 | - | 90 | barium sulfate | 10 |
| 1-18 | 260 | 610 | 0.37 | 1.15 | 350 | 190 | - | - | - | - |
| 3-7 | 260 | 610 | 0.37 | 1.15 | 350 | 190 | - | 100 | - | - |
| 3-8 | 260 | 610 | 0.37 | 1.15 | 350 | 190 | - | 98 | Titanium oxide | 5 |
| 3-9 | 260 | 610 | 0.37 | 1.15 | 350 | 190 | - | 90 | Calcium | 10 |
| 3-10 | 260 | 610 | 0.37 | 1.15 | 350 | 190 | - | 90 | barium sulfate | 10 |
| 3-11 | 260 | 610 | 0.37 | 1.15 | 350 | 190 | - | 90 | barium sulfate | 10 |
| 3-12 | 260 | 610 | 0.37 | 1.15 | 350 | 190 | - | 90 | banum sulfate | 10 |
| 2-1 | 260 | 520 | 0.30 | 1.12 | 260 | - | 235 | - | - | - |
| 4-1 | 260 | 520 | 0.30 | 1.12 | 260 | - | 235 | 100 | - | - |

(continued)

| | η1 (Pa·s) | η2 (Pa·s) | log10 (η2/η1) | log10 (η2) /log10(η1) | η2-η1 (Pa·s) | Tg1 (°C) | Tm2 (°C) | Sub-layer (B layer) composition | | |
|---|---|---|---|---|---|---|---|---|---|---|
| | | | | | | | | PET | Inorganic particles | |
| | | | | | | | | Content by percentage (% by weight) | Kind | Content by percentage (% by weight) |
| Example | | | | | | | | | | |
| 4-2 | 260 | 520 | 0.30 | 1.12 | 260 | - | 235 | 98 | Titanium oxide | 5 |
| 4-3 | 260 | 520 | 0.30 | 1.12 | 260 | - | 235 | 90 | Calcium | 10 |
| 4-4 | 260 | 520 | 0.30 | 1.12 | 260 | - | 235 | 90 | barium sulfate | 10 |
| 4-5 | 260 | 520 | 0.30 | 1.12 | 260 | - | 235 | 90 | barium sulfate | 10 |
| 4-6 | 260 | 520 | 0.30 | 1.12 | 260 | - | 235 | 90 | barium sulfate | 10 |

Table 6-3

| | η1 (Pa·s) | n2 (Pa·s) | log10 (η2/η1 ) | log10 (η2) /log10 (η1) | η2-η1 (Pa·s) | Tg1 (°C) | Tm2 (°C) | Sub-layer (B layer) composition | | |
|---|---|---|---|---|---|---|---|---|---|---|
| | | | | | | | | PET | Inorganic particles | |
| | | | | | | | | Content by percentage (% by weight) | Kind | Content by percentage (% by weight) (% by weight) |
| Comparative Example | | | | | | | | | | |
| 1-1 | 440 | 1650 | 0.57 | 1.22 | 1210 | 190 | - | - | - | - |
| 3-1 | 440 | 1650 | 0.57 | 1.22 | 1210 | 190 | - | - | - | - |
| 3-2 | 440 | 1650 | 0.57 | 1.22 | 1210 | 190 | - | 98 | Titanium oxide | 5 |
| 3-3 | 440 | 1650 | 0.57 | 1.22 | 1210 | 190 | - | 90 | Calcium | 10 |
| 3-4 | 440 | 1650 | 0.57 | 1.22 | 1210 | 190 | - | 90 | banum sulfate | 10 |
| 1-3 | 260 | 1650 | 0.80 | 1.33 | 1390 | 190 | - | - | - | - |
| 3-5 | 260 | 1650 | 0.80 | 1.33 | 1390 | 190 | - | 100 | - | - |
| 3-6 | 260 | 1650 | 0.80 | 1.33 | 1390 | 190 | - | 98 | Titanium oxide | 5 |
| 3-7 | 260 | 1650 | 0.80 | 1 33 | 1390 | 190 | - | 90 | Calcium | 10 |
| 3-8 | 260 | 1650 | 0.80 | 1.33 | 1390 | 190 | - | 90 | barium sulfate | 10 |
| 2-1 | 260 | 1420 | 0.74 | 1.31 | 1160 | - | 235 | - | - | - |
| 4-1 | 260 | 1420 | 0.74 | 1.31 | 1160 | - | 235 | 100 | - | - |
| 4-2 | 260 | 1420 | 0.74 | 1.31 | 1160 | - | 235 | 98 | Titanium oxide | 5 |
| 4-3 | 260 | 1420 | 0.74 | 1.31 | 1160 | - | 235 | 90 | Calcium | 10 |
| 4-4 | 260 | 1420 | 0.74 | 1.31 | 1160 | - | 235 | 90 | barium sulfate | 10 |

Table 6-4

| | Film structure | lamination ratio | Heatset temperature (°C) | Stretchability | Film-formability |
|---|---|---|---|---|---|
| Example | | | | | |
| 1-1 | Single layer | - | 190 | S | S |
| 3-1 | B/A/B | 1/20/1 | 190 | S | S |
| 3-2 | B/A/B | 1/20/1 | 190 | S | S |
| 3-3 | B/A/B | 1/20/1 | 190 | S | S |
| 3-4 | B/A/B | 1/20/1 | 190 | S | S |
| 3-5 | B/A/B | 1/20/1 | 250 | S | S |
| 3-6 | B/A/B | 1/20/1 | 300 | S | S |
| 1-18 | Single layer | - | 190 | S | S |
| 3-7 | B/A/B | 1/20/1 | 190 | S | S |
| 3-8 | B/A/B | 1/20/1 | 190 | S | S |
| 3-9 | B/A/B | 1/20/1 | 190 | S | S |
| 3-10 | B/A/B | 1/20/1 | 190 | S | S |
| 3-11 | B/A/B | 1/20/1 | 190 | S | S |
| 3-12 | B/A/B | 1/20/1 | 190 | S | S |
| 2-1 | Single layer | - | 210 | S | B |
| 4-1 | B/A/B | 1/20/1 | 210 | S | A |
| 4-2 | B/A/B | 1/20/1 | 210 | S | A |
| 4-3 | B/A/B | 1/20/1 | 210 | S | A |
| 4-4 | B/A/B | 1/20/1 | 210 | S | A |
| 4-5 | B/A/B | 1/20/1 | 210 | S | A |
| 4-6 | B/A/B | 1/20/1 | 210 | S | A |
| Comparative Example | | | | | |
| 1-1 | Single layer | - | 190 | S | S |
| 3-1 | B/A/B | 1/20/1 | 190 | S | S |
| 3-2 | B/A/B | 1/20/1 | 190 | S | S |
| 3-3 | B/A/B | 1/20/1 | 190 | S | S |
| 3-4 | B/A/B | 1/20/1 | 190 | S | S |
| 1-3 | Single layer | - | 190 | S | A |
| 3-5 | B/A/B | 1/20/1 | 190 | S | S |
| 3-6 | B/A/B | 1/20/1 | 190 | S | S |
| 3-7 | B/A/B | 1/20/1 | 190 | S | S |
| 3-8 | B/A/B | 1/20/1 | 190 | S | S |
| 2-1 | Single layer | - | 210 | S | B |
| 4-1 | B/A/B | 1/20/1 | 210 | S | A |
| 4-2 | B/A/B | 1/20/1 | 210 | S | A |
| 4-3 | B/A/B | 1/20/1 | 210 | S | A |

(continued)

| Comparative Example | | | | | |
|---|---|---|---|---|---|
| 4-4 | B/A/B | 1/20/1 | 210 | S | A |

Table 6-5

| | Main layer (A layer) dispersion diameter | | | | |
|---|---|---|---|---|---|
| | Number-average particle size Dn (μm) | The number (per $\mu m^2$) of resin particles | Proportion (%) of resin particles having a particle diameter of 2 μm or more | Volume-average particle size Dv (μm) | Dv/Dn |
| Example | | | | | |
| 1-1 | 0.81 | 0.152 | 0.2 | 1.12 | 1.38 |
| 3-1 | 0.81 | 0.152 | 0.2 | 1.12 | 1.38 |
| 3-2 | 0.81 | 0.152 | 0.2 | 1.12 | 1.38 |
| 3-3 | 0.81 | 0.152 | 0.2 | 1.12 | 1.38 |
| 3-4 | 0.81 | 0.152 | 0.2 | 1.12 | 1.38 |
| 3-5 | 0.81 | 0.152 | 0.2 | 1.12 | 1.38 |
| 3-6 | 0.81 | 0.152 | 0.2 | 1.12 | 1.38 |
| 1-18 | 0.84 | 0.149 | 0.5 | 1.18 | 1.40 |
| 3-7 | 0.84 | 0.149 | 0.5 | 1.18 | 1.40 |
| 3-8 | 0.84 | 0.149 | 0.5 | 1.18 | 1.40 |
| 3-9 | 0.84 | 0.149 | 0.5 | 1.18 | 1.40 |
| 3-10 | 0.84 | 0.149 | 0.5 | 1.18 | 1.40 |
| 3-11 | 0.84 | 0.149 | 0.5 | 1.18 | 1.40 |
| 3-12 | 0.84 | 0.149 | 0.5 | 1.18 | 1.40 |
| 2-1 | 1.32 | 0.069 | 9.5 | 1.86 | 1.41 |
| 4-1 | 1.32 | 0.069 | 9.5 | 1.86 | 1.41 |
| 4-2 | 1.32 | 0.069 | 9.5 | 1.86 | 1.41 |
| 4-3 | 1.32 | 0.069 | 9.5 | 1.86 | 1.41 |
| 4-4 | 1.32 | 0.069 | 9.5 | 1.86 | 1.41 |
| 4-5 | 1.32 | 0.069 | 9.5 | 1.86 | 1.41 |
| 4-6 | 1.32 | 0.069 | 9.5 | 1.86 | 1.41 |
| Comparative Example | | | | | |
| 1-1 | 1.08 | 0.130 | 15.1 | 1.89 | 1.75 |
| 3-1 | 1.08 | 0.130 | 15.1 | 1.89 | 1.75 |
| 3-2 | 1.08 | 0.130 | 15.1 | 1.89 | 1.75 |
| 3-3 | 1.08 | 0.130 | 15.1 | 1.89 | 1.75 |
| 3-4 | 1.08 | 0.130 | 15.1 | 1.89 | 1.75 |
| 1-3 | 1.75 | 0.110 | 12.5 | 3.00 | 1.71 |
| 3-5 | 1.75 | 0.110 | 12.5 | 3.00 | 1.71 |

(continued)

| | | | | | |
|---|---|---|---|---|---|
| Comparative Example | | | | | |
| 3-6 | 1.75 | 0.110 | 12.5 | 3.00 | 1.71 |
| 3-7 | 1.75 | 0.110 | 12.5 | 3.00 | 1.71 |
| 3-8 | 1.75 | 0.110 | 12.5 | 3.00 | 1.71 |
| 2-1 | 1.36 | 0.052 | 15.3 | 2.24 | 1.65 |
| 4-1 | 1.36 | 0.052 | 15.3 | 2.24 | 1.65 |
| 4-2 | 1.36 | 0.052 | 15.3 | 2.24 | 1.65 |
| 4-3 | 1.36 | 0.052 | 15.3 | 2.24 | 1.65 |
| 4-4 | 1.36 | 0.052 | 15.3 | 2.24 | 1.65 |

Table 6-6

| | Film thickness (μm) | Specific gravity | Transmit tance (%) | Reflectance (%) | Brightness (cd/m2) | Thermostability |
|---|---|---|---|---|---|---|
| Example | | | | | | |
| 1-1 | 188 | 0.58 | 1.9 | 101.2 | 5070 | A |
| 3-1 | 188 | 0.61 | 1.8 | 101.3 | 5080 | A |
| 3-2 | 188 | 0.63 | 1.4 | 100.9 | 5040 | A |
| 3-3 | 188 | 0.61 | 1.7 | 101.5 | 5090 | A |
| 3-4 | 188 | 0.62 | 1.6 | 101.6 | 5100 | A |
| 3-5 | 250 | 0.62 | 1.3 | 101.9 | 5130 | A |
| 3-6 | 300 | 0.62 | 1.1 | 102.4 | 5160 | A |
| 1-18 | 188 | 0.58 | 1.9 | 101.2 | 5070 | A |
| 3-7 | 188 | 0.61 | 1.8 | 101.3 | 5080 | A |
| 3-8 | 188 | 0.63 | 1.4 | 100.9 | 5040 | A |
| 3-9 | 188 | 0.61 | 1.7 | 101.5 | 5090 | A |
| 3-10 | 188 | 0.62 | 1.6 | 101.6 | 5100 | A |
| 3-11 | 250 | 0.62 | 1.3 | 101.9 | 5130 | A |
| 3-12 | 300 | 0.62 | 1.1 | 102.4 | 5160 | A |
| 2-1 | 188 | 0.62 | 2.5 | 100.2 | 4960 | S |
| 4-1 | 188 | 0.65 | 2.4 | 100.3 | 4970 | S |
| 4-2 | 188 | 0.67 | 1.9 | 100 | 4940 | S |
| 4-3 | 188 | 0.65 | 2.2 | 100.5 | 5000 | S |
| 4-4 | 188 | 0.62 | 2.1 | 100.6 | 5020 | S |
| 4-5 | 250 | 0.62 | 1.8 | 101.3 | 5080 | S |
| 4-6 | 300 | 0.62 | 1.5 | 101.7 | 5110 | S |
| Comparative Example | | | | | | |
| 1-1 | 188 | 0.64 | 2.6 | 99.8 | 4940 | A |

(continued)

| Comparative Example | | | | | | |
|---|---|---|---|---|---|---|
| 3-1 | 188 | 0.67 | 2.5 | 99.9 | 4950 | A |
| 3-2 | 188 | 0.69 | 2.1 | 99.6 | 4900 | A |
| 3-3 | 188 | 0.67 | 2.4 | 100 | 4960 | A |
| 3-4 | 188 | 0.64 | 2.3 | 100.1 | 4970 | A |
| 1-3 | 188 | 0.65 | 2.80 | 99.7 | 4930 | A |
| 3-5 | 188 | 0.67 | 2.7 | 99.8 | 4940 | A |
| 3-6 | 188 | 0.69 | 2.3 | 99.5 | 4890 | A |
| 3-7 | 188 | 0.67 | 2.4 | 99.9 | 4950 | A |
| 3-8 | 188 | 0.64 | 2.3 | 100 | 4960 | A |
| 2-1 | 188 | 0.65 | 2.9 | 99.5 | 4920 | A |
| 4-1 | 188 | 0.66 | 2.8 | 99.6 | 4930 | S |
| 4-2 | 188 | 0.69 | 2.1 | 99.3 | 4890 | S |
| 4-3 | 188 | 0.67 | 2.5 | 99.8 | 4940 | S |
| 4-4 | 188 | 0.68 | 2.4 | 99.9 | 4950 | S |

Table 7-1

| | | | | | Sub-layer (B layer) composition | | |
|---|---|---|---|---|---|---|---|
| | PET | Copolymerized PET | Inorganic particles | | PET | Inorganic particles | |
| | Content by percentage (% by weight) | Content by percentage (% by weight) | Kind | Content by percentage (% by weight) | Content by percentage (% by weight) | Kind | Content by percentage (% by weight) |
| Comparative Example 5-1 | 65 | 20 | barium sulfate | 15 | - | - | - |
| Comparative Example 5-2 | 60 | 20 | barium sulfate | 20 | - | - | - |
| Comparative Example 5-3 | 47 | 20 | barium sulfate | 15 | 100 | - | - |
| Comparative Example 5-4 | 47 | 20 | barium sulfate | 15 | 98 | Titanium oxide | 5 |
| Comparative Example 5-5 | 47 | 20 | barium sulfate | 15 | 90 | Calcium carbonate | 10 |
| Comparative Example 5-6 | 47 | 20 | barium sulfate | 15 | 90 | barium sulfate | 10 |

Table 7-2

| | Film structure | lamination ratio | Heatset temperature (°C) | Stretchability | Film-formability | Main layer (A layer) dispersion diameter | | | | |
|---|---|---|---|---|---|---|---|---|---|---|
| | | | | | | Number-average particle size On (μm) | The number (per m2) of inorganic particles | Proportion (%) of resin particles having a particle diameter of 2 μm or more | Volume-average particle size Dv (μm) | Dv/Dn |
| Comparative Example 5-1 | Single layer | - | 190 | ○ | Δ | 0.8 | 0.125 | 2.0 | 0.86 | 1.08 |
| Comparative Example 5-2 | Single layer | - | 190 | ○ | × | - | - | - | - | - |
| Comparative Example 5-3 | B/A/B | 1/20/1 | 190 | ○ | Δ | 0.8 | 0.125 | 2.0 | 0.86 | 1.08 |
| comparative Example 5-4 | B/A/B | 1/20/1 | 190 | ○ | Δ | 0.8 | 0.125 | 2.0 | 0.86 | 1.08 |
| Comparative Example 5-5 | B/A/B | 1/20/1 | 190 | ○ | Δ | 0.8 | 0.125 | 2.0 | 0.86 | 1.08 |
| Comparative Example 5-6 | B/A/B | 1/20/1 | 190 | ○ | Δ | 0.8 | 0.125 | 2.0 | 0.86 | 1.08 |

Table 7-3

| | Film thickness (μm) | Specific gravity | Transmittance (%) | Reflectance (%) | Brightness (cd/m2) | Thermost ability |
|---|---|---|---|---|---|---|
| Comparative Example 5-1 | 188 | 0.72 | 2.1 | 100.2 | 4960 | ○ |
| Comparative Example 5-2 | - | - | - | - | - | - |
| Comparative Example 5-3 | 188 | 0.71 | 2.0 | 100.3 | 4970 | ○ |
| Comparative Example 5-4 | 188 | 0.75 | 1.7 | 99.5 | 4900 | ○ |
| Comparative Example 5-5 | 188 | 0.72 | 2.2 | 100.2 | 4960 | ○ |
| Comparative Example 5-6 | 188 | 0.72 | 2.1 | 100.2 | 4960 | ○ |

Table 8-1

| | Crystalline resin (A) | | Incompatible resin (B) | | Copolymeri zed resin (C) | Dispersing agent (D) |
|---|---|---|---|---|---|---|
| | Kind | Content by percentage (% by weight) | Kind | Content by percentage (% by weight) | Content by percentage (% by weight) | Content by percentage (% by weight) |
| Example | | | | | | |
| 6-1 | A-1 | 49 | XC99-A8808 | 25 | 20 | 6 |
| Comparative Example | | | | | | |
| 6-1 | A-1 | 49 | TOSPEARL 120 | 25 | 20 | 6 |

Table 8-2

| | Heatset temperature (°C) | Stretc hability | Film-formability | Number-average particle size Dn (μm) | The number (per μm²) of resin particles | Proportion (%) of resin particles having a particle diameter of 2 μm or more | Volume-average particle size Dv (μm) | Dv/Dn |
|---|---|---|---|---|---|---|---|---|
| Example | | | | | | | | |
| 6-1 | 190 | S | S | 0.70 | 0.155 | 0.15 | 0.87 | 1.24 |
| Comparative Example | | | | | | | | |
| 6-1 | 190 | S | S | 2.00 | 0.080 | 20.0 | 2.50 | 1.25 |

Table 8-3

| | Film thickness (μm) | Specific gravity | Transmittance (%) | Relative reflectance (%) | Brightness cd/m2 | Thermostability |
|---|---|---|---|---|---|---|
| Example | | | | | | |
| 6-1 | 188 | 0.57 | 1.80 | 101.8 | 5110 | A |
| Comparative Example | | | | | | |
| 6-1 | 188 | 0.68 | 2.90 | 99.5 | 4920 | A |

INDUSTRIAL APPLICABILITY

The white film of the invention is excellent in reflection property, lightweightness, and others. When the white film is used, in particular, as a reflection plate or reflector in a surface light source, the film makes it possible to lighten a liquid crystal screen brightly to make liquid crystal images thereon more vivid and easier to watch. Thus, the white film is useful.

## Claims

1. A white film comprising therein a matrix resin and resin particles and voids formed around the resin particles,
the film having a layer (S layer), wherein the number-average particle size Dn of the resin particles is 1.5 μm or less, the resin particles are contained in a number of 0.05 or more particles/$\mu m^2$, and
the proportion of the number of resin particles having a particle diameter of 2 μm or more is 15% or less,
whereby the layer (S layer) is yielded by dispersing an incompatible resin (B) which is to be the resin particles into one or more resins which are to be the matrix, wherein the incompatible resin (B) is incompatible with the matrix resin, working this into a sheet form, and then stretching this sheet monoaxially or biaxially,
**characterized in that**
the incompatible resin (B) is contained in an amount of 15 to 50% by weight when the total amount of all materials constituting the S layer is regarded 100% by weight.

2. The white film according to claim 1, wherein the ratio of the volume-average particle size Dv (μm) of the resin particles to the number-average particle size Dn (μm) thereof, Dv/Dn, is 1.7 or less.

3. The white film according to claim 1 or 2, wherein the resin particles include a thermoplastic resin.

4. The white film according to any one of claims 1 to 3, wherein the S layer contain a crystalline resin (A), the resin particles are a resin (B) incompatible with the crystalline resin (A) (hereinafter referred to as the incompatible resin (B)), and the apparent melt viscosity η1 (Pa·s) of the crystalline resin (A) and the apparent melt viscosity η2 (Pa·s) of the incompatible resin (B) at the melting point Tm of the crystalline resin (A) plus 20°C and a shear rate of 200 $sec^{-1}$ satisfy the following expressions (1) and (2):

$$(1)\ -0.3 \leqq \log_{10}(\eta 2/\eta 1) \leqq 0.55$$

$$(2)\ 0.5 \leqq \log_{10}(\eta 2)/\log_{10}(\eta 1) \leqq 1.3$$

5. The white film according to claim 4, wherein the difference between the apparent melt viscosity η1 of the crystalline resin (A) and the apparent melt viscosity η2 of the incompatible resin (B), η2-η1 is from -300 to 1000 Pa·s.

6. The white film according to any one of claims 1 to 5, which has a relative reflectance of 100% or more.

7. Use of the white film according to any one of claims 1 to 6 in a reflection film for a surface light source.

8. A surface light source, wherein a white film as recited in any one of claims 1 to 6 is used.

**Patentansprüche**

1. Weiße Folie, umfassend darin ein Matrixharz, Harzpartikel und Hohlräume, die um die Harzpartikel herum ausgebildet sind, wobei die Folie eine Schicht (S-Schicht) aufweist, wobei der Zahlenmittelwert der Partikelgröße Dn von den Harzpartikeln 1,5 μm oder weniger ist, wobei die Harzpartikel mit einer Anzahl von 0,05 oder mehr Partikeln/$\mu m^2$ enthalten sind, und
wobei der Anteil von der Anzahl an Harzpartikeln, die einen Partikeldurchmesser von 2 μm oder mehr haben, 15 % oder weniger ist, und
wobei die Schicht (S-Schicht) durch das Dispergieren eines inkompatiblen Harzes (B), das die Harzpartikel bildet, in ein oder mehreren Harzen, die die Matrix bilden, wobei das inkompatible Harz (B) mit dem Matrixharz inkompatibel ist, durch das Bearbeiten davon zu einem Blatt und dann durch das monoaxiale oder biaxiale Verstrecken dieses Blatts erzeugt wird, **dadurch gekennzeichnet, dass**
das inkompatible Harz (B) mit einer Menge von 15 bis 50 Gew.-% enthalten ist, wenn die Gesamtmenge aller Materialen, die die S-Schicht ausmachen, als 100 Gew.-% angesehen wird.

2. Weiße Folie nach Anspruch 1, wobei das Verhältnis von dem Volumenmittelwert der Partikelgröße Dv (μm) von den Harzpartikeln zu dem Zahlenmittelwert der Partikelgröße Dn (μm) von den Harzpartikeln, Dv/Dn, 1,7 oder weniger ist.

3. Weiße Folie nach Anspruch 1 oder 2, wobei die Harzpartikel ein thermoplastisches Harz umfassen.

4. Weiße Folie nach einem der Ansprüche 1 bis 3, wobei die S-Schicht ein kristallines Harz (A) enthält, wobei die Harzpartikel ein Harz (B) sind, das mit dem kristallinen Harz (A) inkompatibel ist, (nachstehend als inkompatibles Herz (B) bezeichnet), und die scheinbare Schmelzviskosität η1 (Pa · s) des kristallinen Harzes (A) und die scheinbare Schmelzviskosität η2 (Pa s) des inkompatiblen Harzes (B) am Schmelzpunkt $T_m$ des kristallinen Harzes (A) bei plus 20 °C und einer Schergeschwindigkeit von 200 $s^{-1}$ die folgenden Ausdrücke (1) und (2) erfüllen:

$$(1) \quad -0,3 \leq \log_{10} (\eta 2 / \eta 1) \leq 0,55$$

$$(2) \quad 0,5 \leq \log_{10} (\eta 2) / \log_{10} (\eta 1) \leq 1,3$$

5. Weiße Folie nach Anspruch 4, wobei die Differenz zwischen der scheinbaren Schmelzviskosität η1 des kristallinen Harzes (A) und der scheinbaren Schmelzviskosität η2 des inkompatiblen Harzes (B), η2 - η1, von -300 bis 1000 Pa · s reicht.

6. Weiße Folie nach einem der Ansprüche 1 bis 5, wobei die relative Reflexion 100 % oder mehr ist.

7. Verwendung der weißen Folie nach einem der Ansprüche 1 bis 6 in einer Reflexionsfolie für eine Flächenlichtquelle.

8. Flächenlichtquelle, wobei eine weiße Folie nach einem der Ansprüche 1 bis 6 verwendet wird.

**Revendications**

1. Film blanc comprenant à l'intérieur une résine matricielle et des particules de résine et des vides formés autour des particules de résine, le film comportant une couche (couche S), dans lequel la taille moyenne des particules en nombre Dn des particules de résine est inférieure ou égale à 1,5 μm, les particules de résine sont contenues dans un nombre supérieur ou égal à 0,05 particule/$\mu m^2$, et
la proportion du nombre de particules de résine ayant un diamètre de particule supérieur ou égal à 2 μm est inférieure

ou égal à 15 %,
moyennant quoi la couche (couche S) est obtenue en dispersant une résine incompatible (B) qui est censée être les particules de résines dans une ou plusieurs résines qui sont censées être la matrice, la résine incompatible (B) étant incompatible avec la résine matricielle, en la travaillant sous forme de feuille et en étirant ensuite cette feuille monoaxialement ou biaxialement,
**caractérisé en ce que**
la résine incompatible (B) est contenue dans une quantité de 15 à 50 % en poids lorsque la quantité totale de tous les matériaux constituant la couche S correspond à 100 % en poids.

2. Film blanc selon la revendication 1, dans lequel le rapport de la taille moyenne des particules en volume Dv (μm) des particules de résine sur la taille moyenne des particules en nombre Dn (μm) de celles-ci, Dv/Dn, est inférieur ou égal à 1,7.

3. Film blanc selon la revendication 1 ou 2, dans lequel les particules de résine incluent une résine thermoplastique.

4. Film blanc selon l'une quelconque des revendications 1 à 3, dans lequel la couche S contient une résine cristalline (A), les particules de résine sont une résine (B) incompatible avec la résine cristalline (A) (ci-après appelée la résine incompatible (B)), et la viscosité à l'état fondu apparente η1 (Pa.s) de la résine cristalline (A) et la viscosité à l'état fondu apparente η2 (Pa.s) de la résine incompatible (B) au point de fusion Tm de la résine cristalline (A) plus 20°C et une vitesse de cisaillement de 200 $sec^{-1}$ satisfont les expressions (1) et (2) suivantes :

$$(1)\ -0{,}3 \leq \log_{10}(\eta 2/\eta 1) \leq 0{,}55$$

$$(2)\ 0{,}5 \leq \log_{10}(\eta 2)/\log_{10}(\eta 1) \leq 1{,}3$$

5. Film blanc selon la revendication 4, dans lequel la différence entre la viscosité apparente à l'état fondu η1 de la résine cristalline (A) et la viscosité apparente à l'état fondu η2 de la résine incompatible (B), η2 - η1 est de -300 à 1000 Pa.s.

6. Film blanc selon l'une quelconque des revendications 1 à 5, qui a une réflectance relative supérieure ou égale à 100 %.

7. Utilisation du film blanc selon l'une quelconque des revendications 1 à 6, dans un film réfléchissant pour une source de lumière surfacique.

8. Source de lumière surfacique, dans laquelle est utilisé un film blanc selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6322153 A
- JP 7118433 A
- EP 1702761 A1